# EUROPÄISCHE PATENTSCHRIFT

(11) **EP 1 530 607 B1**
(45) Veröffentlichungstag und Bekanntmachung des Hinweises auf die Patenterteilung: **29.10.2008**
(21) Anmeldenummer: 03792323.2
(22) Anmeldetag: 14.08.2003
(51) Int. Cl.: C08G 77/38, C08G 77/42, C08B 37/00, C07F 7/00

(54) **CYCLODEXTRINRESTE AUFWEISENDE ORGANOSILICIUMVERBINDUNGEN**
ORGANOSILICON COMPOUNDS COMPRISING CYCLODEXTRIN RADICALS
COMPOSES D'ORGANOSILICIUM PRESENTANT DES RADICAUX DE CYCLODEXTRINE

(30) Priorität: 23.08.2002 DE 10238818
(43) Veröffentlichungstag der Anmeldung: 18.05.2005
(60) Teilanmeldung: 07114832.4
(73) Patentinhaber: Wacker Chemie AG, 81737 München (DE)
(72) Erfinder: OCHS, Christian, 84489 Burghausen (DE); HABEREDER, Peter, 82152 Kreilling (DE); KALUZA, Gloria, 84489 Burghausen (DE)
(74) Vertreter: Budczinski, Angelika
(86) Internationale Anmeldenummer: PCT/EP2003/009053
(87) Internationale Veröffentlichungsnummer: WO 2004/018547

(56) Entgegenhaltungen:
- WO-A-96/31540
- DE-A- 4 208 402
- DE-A- 19 520 989
- DE-A- 19 831 073
- US-A- 5 268 442
- US-A- 5 403 898
- PATENT ABSTRACTS OF JAPAN vol. 1996, no. 02, 29. Februar 1996 (1996-02-29) & JP 07 252303 A (TOPPAN PRINTING CO LTD), 3. Oktober 1995 (1995-10-03)

## Beschreibung

Die Erfindung betrifft Cyclodextrinreste aufweisende Organosiliciumverbindungen, deren Herstellung, deren Verwendung, insbesondere in der Textilausrüstung, sowie vernetzbare Massen auf der Basis von Cyclodextrinreste aufweisenden Organosiliciumverbindungen.

Organosiliciumverbindungen, insbesondere Organosilane und Organosiloxane, sind bereits seit langem bekannt und finden unter anderem als Textilweichmacher Anwendung.

Cylcodextrine sind cyclische Oligosaccharide die aus 6, 7 oder 8 α(1-4) verknüpften Anhydroglycoseeinheiten aufgebaut sind. Die durch enzymatische Stärkekonversion hergestellten α-, β-, oder γ-Cyclodextrine unterscheiden sich in dem Durchmesser ihrer hydrophoben Kavität und eignen sich generell zum Einschluss zahlreicher lipophiler Substanzen.

Cyclodextrinderivate werden durch chemische Modifizierung an den OH-Gruppen des Cyclodextrins hergestellt. Beispiele hierfür sind die Hydroxypropylierung mittels Propylenoxid und die Methylierung mit Hilfe von Methylhalogeniden. Die so erhaltenen Cyclodextrinderivate sind wesentlich stärker wasserlöslich als native Cyclodextrine und können durch Einschluss hydrophober Substanzen und Bildung wasserlöslicher Komplexe solche an sich wasserunlöslichen Substanzen im wässrigen Medium solubilisieren. Des weiteren werden in DE-A 195 20 967 reaktive Cyclodextrinderivate mit mindestens einem stickstoffhaltigen Heterozyclus beschrieben, welche zur Ausrüstung von textilen Materialien oder Leder eingesetzt werden können. Während unsubstituierte oder mit Methyl- bzw. Hydroxypropylgruppen substituierte Cyclodextrine nur mit Hilfe von Bindersystemen auf textilen Substraten fixiert werden können ist das Monochlortriazinderivat in völliger Analogie zu Reaktivfarbstoffen zur Bildung einer echten kovalenten Bindung mit den OH-Gruppen des cellulosischen Textilsubstrates fähig. Dazu müssen allerdings "Färbebedingungen" eingehalten werden, d.h. die Cellulose ist im allgemeinen nur nach Aktivierung durch Alkali und bei erhöhter Temperatur reaktionsfähig genug, um diese Bindung einzugehen. Als Konkurrenzreaktion tritt dabei die Hydrolyse des Chlortriazinrestes ein. Aus der Färberei ist bekannt, dass Reaktivfarbstoffe daher meist nur mit rund 50 %iger Ausbeute auf ziehen und die andere Hälfte durch Hydrolyse verloren geht. Mit einem ähnlichen Verhältnis ist bei der Umsetzung des cellulosischen Textilsubstrates mit einem Monochlortriazin-funktionellen Cyclodextrin zu rechnen.

Organosiliciumverbindungen mit kovalent gebundenen Cyclodextrinresten sind im Bereich der chromatographischen Trennungs-Analytik bekannt. Die an einem Trägermaterial, wie etwa Silicagel, immobilisierten, cyclodextrinhaltigen Polymere dienen insbesondere als chirale stationäre Phasen zur Enantiomerentrennung von organischen Verbindungen. Daneben finden spezielle Siloxan-Cyclodextrin-Copolymere als Kontaktlinsenmaterial oder in ionensensitiven Elektroden Verwendung. Hierzu sei beispielsweise auf DE-A-43 24 636, US-A 5,268,442, US-A 5,403,898 und EP-A 586 322 verwiesen. In allen Fällen handelt es sich um mehrstufige, zeitaufwendige Synthesen auf der Basis von Hydrosilylierungsreaktionen, die nur in geringer Ausbeute die gewünschten Materialien liefern.

Ferner sind Block-Copolymere mit Cyclodextrin in der Polymerkette bekannt. Die Copolymerenbildung kann auf zwei Arten erfolgen. M. B. Ali et al., Mater. Sci. Eng. C 1998, C6, 53 setzen eine oder mehrere Hydroxygruppen des Cyclodextrinmoleküls direkt mit Hydromethylsiloxy-Einheiten enthaltenden Polyorganosiloxanen unter Wasserstoffabspaltung um. Die erhaltenen Materialien finden als Membrangele in ionensensitiven Elektroden Anwendung. Maciejewski et al. PL-B-178362 dagegen bevorzugen die unter HCl-Abspaltung verlaufende Polykondensation OHhaltiger Cyclodextrin-Derivate mit Chlorsilanen. In beiden Fällen entstehen Cyclodextrin-Silicon-Block-Copolymere, in denen das Cyclodextrin-Molekül integraler Bestandteil des Polymernetzwerks ist und als Bindeglied bzw. Verzweigungsstelle zwischen den Siloxanblöcken fungiert. Bedingt durch die SiOC-Verknüpfung sind die Copolymere unter nicht-neutralen Bedingungen nicht hydrolysestabil. Weiterer Nachteil der genannten Verfahren ist einerseits die Freisetzung von Wasserstoff, die im technischen Maßstab erhebliche Probleme mit sich bringt, sowie im Falle von PL-B-178362 die uneinheitliche Copolymerzusammensetzung, die allein durch statistische Effekte gesteuert wird.

Neben den bisher genannten Verfahren findet man in der Literatur auch vereinzelte Beispiele für Verknüpfungen über Carbon- oder Kohlensäure-Derivate. Auch die Säure-katalysierte Epoxid-Ringöffnung durch die Hydroxygruppen des Cyclodextrin-Moleküls wurde in der Vergangenheit bereits beschrieben. Beispiele hierzu sind S. K. Young et al. (Polym. Prepr. 2001, 42, 162), M. Tanaka et al. (Fresenius Z. Anal. Chem. 1983, 316, 54) sowie DE-A-42 08 4.02. Auch hier sind wiederum kostenintensive Reagenzien sowie die mehrstufigen Syntheseverfahren von Nachteil.

Cyclodextrinreste aufweisende Organosiliciumverbindungen enthaltend Einheiten der Formel.

AₐR_{b}X_{c}H_{d}SiO_{(4-a-b-c-d)/2} (I),

wobei
A gleich oder verschieden sein kann und einen Rest der Formel

   CD-R²- (II)

   bedeutet, wobei
   CD ein- oder mehrwertiger, gegebenenfalls derivatisierter Cyclodextrinrest bedeutet und R² ein zweiwertiger, gegebenenfalls substituierter Kohlenwasserstoffrest bedeutet, der mit Sauerstoff, Mercapto-, Amin-, Carbonyl-, Carboxyl-, Sulfoxid- oder Sulfonylgruppen unterbrochen sein kann,
   R gleich oder verschieden sein kann und einen gegebenenfalls substituierten Kohlenwasserstoffrest, der durch Sauerstoffatome, Schwefelatome und/oder Stickstoffatome unterbrochen sein kann, bedeutet,
   X gleich oder verschieden sein kann und einen Rest der Formel -OR¹ mit R¹ gleich Wasserstoffatom oder gegebenenfalls substituierten Kohlenwasserstoffrest, der durch Ethersauerstoffatome substituiert sein kann, bedeutet,
   a 0, 1 oder 2, bevorzugt 0 oder 1, ist
   b 0, 1, 2 oder 3 ist,
   c 0, 1, 2 oder 3, bevorzugt 0 oder 1, ist und
   d 0, 1, 2 oder 3, bevorzugt 0, ist,
mit der Maßgabe, dass
- die Summe a+b+c+d ≤ 4 ist,
- die Organosiliciumverbindung pro Molekül mindestens einen Rest A aufweist,
- in maximal 90% der Einheiten der Formel (I), bevorzugt maximal 50%, besonders bevorzugt maximal 30%, insbesondere in keiner Einheit der Formel (I), die Summe aus a+b+c+d=0 ist,
- im Fall von Organosiliciumverbindungen der Formel (I) mit a+b+c+d=4 Rest R² nicht Triazinylenrest bedeuten kann,
- im Fall von Organosiliciumverbindungen aus Einheiten der Formel (I) mit a+b+c+d ≤ 3 Rest R² nicht ein rein aliphatisches, d.h. ausschließlich aus Kohlenstoff-Kohlenstoff-Einfachbindungen aufgebautes, und ω-Sic-artig mit der Organosiliciumverbindung verknüpftes α-Carbon- oder α-Kohlensäure-Derivat, wie Carbonsäureester, Thiolcarbonsäurester, Carbonsäureamid, Thioncarbonsäureamid, Urethan, S-Thiourethan oder Harnstoffderivat, sein kann,
- im Fall von Organosiliciumverbindungen aus Einheiten der Formel (I) mit a+b+c+d ≤ 3 Rest R² nicht zweiwertiger Kohlenwasserstoffrest, ausgewählt aus der Gruppe -CH₂-CHOH-CH₂-O-(CH₂)₃-,
- (CH₂)ₑ-, -Ar-(CH₂)ₑ-, -Ar-O-(CH₂)ₑ-, -Ar-S-(CH₂)ₑ-, -Ar-NH-(CO)-(CH₂)ₑ- oder -(CO)-Ar-O-(CH₂)ₑ-, worin e gleich 0-16 und Ar gleich Phenylen-, Pyridylen- oder Furanylenrest ist, bedeuten kann, wobei das zur chemischen Bindung von CD an R² verwendete Cyclodextrin-Sauerstoffatom gegen S, NH oder NR⁰ mit R⁰ gleich einer für Rest R oben angegebener Bedeutung, ersetzt sein kann.

Im Rahmen der vorliegenden Erfindung sollen von dem Begriff Organopolysiloxane sowohl polymere, oligomere wie auch dimere Siloxane mitumfaßt werden.

Bei den Organosiliciumverbindungen kann es sich sowohl um Silane handeln, d.h. Verbindungen der Formel (I) mit a+b+c+d=4, als auch um Siloxane, d.h. Verbindungen enthaltend Einheiten der Formel (I) mit a+b+c+d≤3. Vorzugsweise handelt es sich bei den Organosiliciumverbindungen um Organopolysiloxane, insbesondere um solche, die aus Einheiten der Formel (I) bestehen.

Beispiele für Rest R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der der α- und der β-phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest, Aminoalkylreste, wie der Aminopropyl-, Aminoethylaminopropyl-, Cyclohexylaminopropyl-, Dimethylaminopropyl-, Diethylaminopropylrest oder acetylierte Aminopropylreste, Hydroxyfunktionelle Reste, wie die von prim., sek. oder tert. Alkoholen, wie z.B. der 3-Hydroxypropyl- und 4-Hydroxybutylrest, oder wie die aromatischer Alkohole, wie z.B. der Phenol- oder Eugenolrest, mercaptofunktionelle Reste, wie der 3-Mercaptopropylrest, carbonsäurefunktionelle Reste sowie deren Derivate oder Salze, wie der Essigsäure-, 3-Carboxypropyl-, 4-Carboxy-butyl-, 10-Carboxy-decyl-, 3-(2,5-Dioxotetrahydrofuranyl)-propyl-, 3-(Ethan-1,2-dicarbonsäure)-propyl-, 3-Acryloxy-propyl-, 3-Methacryloxy-propyl- oder Undecensilylesterrest, epoxyfunktionelle Reste der Gruppe bestehend aus 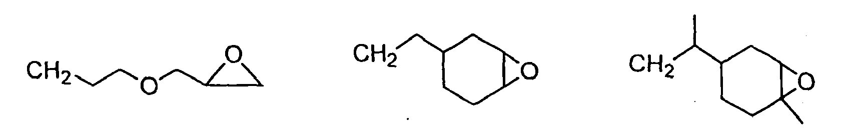 carbonylfunktionelle Reste wie der Propionaldehydrest, polyglykolfunktionelle Reste, wie z.B. Alkylpolyglykolreste, wie der Propylpolyglykolrest, phosphonatofunktionelle Reste, wie z.B. Phosphonatoalkylreste, silalactonfunktionelle Reste, glykosidfunktionelle Reste, wie z.B. solche, bei denen der Glykosidrest, der aus 1 bis 10 Monosaccarideinheiten aufgebaut sein kann, über einen Alkylen- oder Oxyalkylenspacer gebunden ist, sowie die in EP-A-612 759, Seite 2 Zeile 11 bis Seite 3 Zeile 53 genannten Reste.

Bevorzugt handelt es sich bei Rest R um gegebenenfalls mit Hydroxy-, Mercapto-, Amin-, Carbonyl-, Carboxyl- oder Oxiranylgruppen substituierte Kohlenwasserstoffreste mit 1 bis 18 Kohlenstoffatomen, besonders bevorzugt um gegebenenfalls mit Hydroxy-, Mercapto-, Amin-, Carbonyl-, Carboxyl- oder Oxiranylgruppen substituierte Kohlenwasserstoffreste mit 1 bis 11 Kohlenstoffatomen, insbesondere um den Methyl-, Hydroxypropyl-, Mercaptopropyl-, 3-Glycidoxy-propyl-, Aminopropyl- und Aminoethylaminopropyl-, 10-Carboxy-Decyl-, 3-Acryloxy-propyl- und den 3-Methacryloxy-propyl-rest.

Falls es sich bei den Organosiliciumverbindungen um Organopolysiloxane handelt, haben mindestens 50%, besonders bevorzugt mindestens 90%, aller Reste R die Bedeutung von Methylrest.

Beispiele für Reste R¹ sind die für Rest R angegebenen Beispiele.

Bevorzugt handelt es sich bei Rest R¹ um Wasserstoffatom oder einen Alkylrest mit 1 bis 8 Kohlenstoffatomen, besonders bevorzugt um Wasserstoffatom, den Methyl- oder den Ethylrest.

Bevorzugt handelt es sich bei Rest X um Hydroxylrest, Methoxy- oder Ethoxyrest.

Bevorzugt handelt es sich bei X um Hydroxylrest, Methoxy-und Ethoxyrest.

Bei den Resten CD kann es sich um beliebige und bisher bekannte Cyclodextrine bzw. Cyclodexrinderivate, bei denen ein oder mehrere an Sauerstoff gebundene Wasserstoffatome durch eine chemische Bindung ersetzt sind. Vorzugsweise handelt es sich bei den Resten CD um solche der allgemeinen Formel 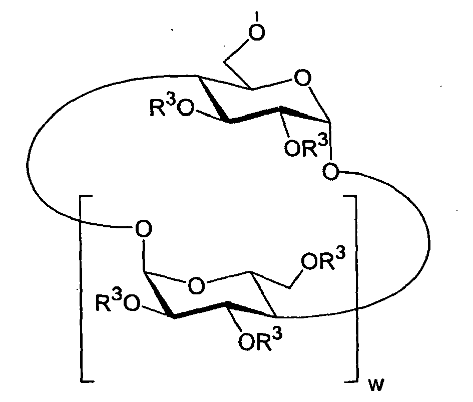 wobei R³ gleich oder verschieden sein kann und Wasserstoffatom, einen einwertigen Rest mit einer für R angegebenen Bedeutung oder einen zweiwertigen Rest mit einer für R² angegebenen Bedeutung darstellt, und w gleich 5, 6 oder 7 ist.

Bevorzugt handelt es sich bei Rest R³ um Wasserstoffatom,einen gegebenenfalls mit Amin-, Carbonyl-, Carboxyl- oder Oxiranylgruppen substituierten ein- oder mehrwertigen Kohlenwasserstoffrest, einen Polyetherrest, der gegebenenfalls mit Hydroxy-, Mercapto-, Amin-, Ammonium-, Carbonyl-, Carboxyl-, Oxiranyl- oder reaktiven Sulfonsäurederivat-Gruppen substituiert sein kann, oder einen halogentriazinfunktionellen Rest.

Besonders bevorzugt handelt es sich bei Rest R³ um Wasserstoffatom, einwertiger Alkylrest, Acetylrest, Amino-, Epoxy-, Vinylsulfonyl-, 2-Sulfooxyethyl-sulfonyl-, 2-Chlorethyl-sulfonyl- und (Meth)acryloylfunktioneller Alkyl- oder Polyetherrest sowie halogentriazinfunktioneller Rest, insbesondere um Wasserstoffatom, den Methyl-, Ethyl- oder Propylrest, den Acetylrest, den β-aminomethyl-, β-(N-Methyl)aminoethyl-, γ-Aminopropyl-, γ-(N-tert.-Butyl)amino-2-hydroxy-propyl- und γ-(N-Cyclohexyl)amino-2-hydroxy-propyl-rest, den Glycidoxypropylrest, den 3-(Vinylsulfonyl)-propyl-, Vinylsulfonyl-, (2-Sulfooxyethyl)sulfonyl-, (2-Chloroethyl)sulfonyl-, *p*-Vinylsulfonyl-phenyl-, *p*-(2-Sulfooxyethyl)sulfonyl-phenyl- und ω-Vinyl-sulfonoyl-polyoxypropyl-rest, der Acryloyl-, 2-(N-Acrylamido)ethyl-, 3-(N-Acrylamido)-propyl- und 2-Hydroxy-3-methacryloyl-oxypropyl-rest sowie den 4-Chlor-6-ONa-Triazinylrest.

Beispiele für Rest R² sind -C₃H₆-O-CH₂-CHOH-CH₂-, -C₃H₆-O-(C₂H₄O)₁₀-CH₂-CHOH-CH₂-, -C₃H₆-O-C₆H₁₀O₄-O-CH₂-CHOH-CH₂-, -C₃H₆-C₆H₄(OCH₃)-O-CH₂-CHOH-CH₂-, -C₃H₆-S-CH₂-CHOH-CH₂-, -C₃H₆-NH-CH₂-CHOH-CH₂-, -C₃H₆-NH-C₂H₄-NH-CH₂-CHOH-CH₂-, -C₁₀H₂₀-COO-CH₂-CHOH-CH₂-, -C₃H₆-NH-CH₂-CHOH-CH₂-O-C₃H₆-, -C₃H₆-NH-C₂H₄-NH-CH₂-CHOH-CH₂-O-C₃H₆-,
-C₃H₆-O-CH₂-CHOH-CH₂-NH-C₂H₄-, -C₃H₆-O-CH₂-CHOH-CH₂-N(CH₃)-C₂H₄, -C₃H₆-O-CH₂-CHOH-CH₂-NH-C₃H₆-, -C₃H₆-O-CH₂-CHOH-CH₂-NH-CH₂-CHOH-CH₂-, -C₃H₆-O-CH₂-CHOH-CH₂-N(t-Bu)-CH₂-CHOH-CH₂-, -C₃H₆-O-CH₂-CHOH-CH₂-N(C₆H₁₁)-CH₂-CHOH-CH₂-, -C₃H₆-O-(CO)-CH₂-CH₂-NH-CH₂-CHOH-CH₂-, -C₃H₆-O-(CO)-CH(CH₃)-CH₂-NH-CH₂-CHOH-CH₂-,
-C₃H₆-O-CH₂-CH₂-(CO)NH-C₂H₄- , -C₃H₆-S-CH₂-CH₂-(CO)NH-C₂H₄-, -C₃H₆-NH-CH₂-CH₂-(CO)NH-C₂H₄-, -C₃H₆-NH-C₂H₄-CH₂-CH₂-(CO)NH-C₂H₄-,
-C₁₀H₂₀-COO-CH₂-CH₂-(CO)NH-C₂H₄-, -C₃H₆-C₆H₄(OCH₃)-O-CH₂-CH₂-(CO)NH-C₂H₄-, -C₃H₆-O-C₆H₁₀O₄-O-CH₂-CH₂-(CO)NH-C₂H₄-, -C₃H₆-O-CH₂-CH₂-(CO)NH-C₃H₆-, -C₃H₆-S-CH₂-CH₂-(CO)NH-C₃H₆-, -C₃H₆-NH-CH₂-CH₂-(CO)NH-C₃H₆-, -C₃H₆-NH-C₂H₄-CH₂-CH₂-(CO)NH-C₃H₆-, -C₁₀H₂₀-COO-CH₂-CH₂-(CO)NH-C₃H₆-, -C₃H₆-C₆H₄(OCH₃)-O-CH₂-CH₂-(CO)NH-C₃H₆-, -C₃H₆-O-C₆H₁₀O₄-O-CH₂-CH₂-(CO)NH-C₃H₆-, -C₃H₆-O-CH₂-CH₂-(CO)NH-CH₂-CHOH-CH₂-, -C₃H₆-S-CH₂-CH₂-(CO)NH-CH₂-CHOH-CH₂-, -C₃H₆-NH-CH₂-CH₂-(CO)NH-CH₂-CHOH-CH₂-, -C₃H₆-NH-C₂H₄-CH₂-CH₂-(CO)NH-CH₂-CHOH-CH₂-,
-C₁₀H₂₀-COO-CH₂-CH₂-(CO)NH-CH₂-CHOH-CH₂-, -C₂H₄-C₆H₄(CH₃)-O-CH₂-CH₂-(CO)NH-CH₂-CHOH-CH₂-, -C₃H₆-O-C₆H₁₀O₄-O-CH₂-CH₂-(CO)NH-CH₂-CHOH-CH₂-, -C₃H₆-O-CH₂-CH₂-COO-C₃H₆-, -C₃H₆-S-CH₂-CH₂-COO-C₃H₆-, -C₃H₆-NH-CH₂-CH₂-COO-C₃H₆-, -C₃H₆-NH-C₂H₄-CH₂-CH₂-COO-C₃H₆-, -C₁₀H₂₀-COO-CH₂-CH₂-COO-C₃H₆-, -C₃H₆-C₆H₄(OCH₃)-O-CH₂-CH₂-COO-C₃H₆-, -C₃H₆-O-C₆H₁₀O₄-O-CH₂-CH₂-COO-C₃H₆-, -C₃H₆-O-CH₂-CH₂-COO-CH₂-CHOH-CH₂-(OC₃H₆)₀₋₁₀-, -C₃H₆-S-CH₂-CH₂-COO-CH₂-CHOH-CH₂-(OC₃H₆)₀₋₁₀-, -C₃H₆-NH-CH₂-CH₂-COO-CH₂-CHOH-CH₂-(OC₃H₆)₀₋₁₀-, -C₃H₆-NH-C₂H₄-CH₂-CH₂-COO-CH₂-CHOH-CH₂-(OC₃H₆)₀₋₁₀-, -C₁₀H₂₀-COO-CH₂-CH₂-COO-CH₂-CHOH-CH₂-(OC₃H₆)₀-₁₀-, -C₃H₆-C₆H₄(OCH₃)-O-CH₂-CH₂-COO-CH₂-CHOH-CH₂-(OC₃H₆)₀₋₁₀-, -C₃H₆-O-C₆H₁₀O₄-O-CH₂-CH₂-COO-CH₂-CHOH-CH₂-(OC₃H₆)₀₋₁₀-, -C₃H₆-O-CH₂-CH(CH₃)-(CO)NH-C₂H₄- , -C₃H₆-S-CH₂-CH(CH₃)-(CO)NH-C₂H₄, -C₃H₆-NH-CH₂-CH(CH₃)-(CO)NH-C₂H₄, -C₃H₆-NH-C₂H₄-CH₂-CH(CH₃)-(CO)NH-C₂H₄- , -C₁₀H₂₀-COO-CH₂-CH(CH₃)-(CO)NH-C₂H₄- , -C₃H₆-C₆H₄(OCH₃)-O-CH₂-CH(CH₃)-(CO)NH-C₂H₄-, -C₃H₆-O-C₆H₁₀O₄-O-CH₂-CH(CH₃)-(CO)NH-C₂H₄- , -C₃H₆-O-CH₂-CH(CH₃)-(CO)NH-C₃H₆-, -C₃H₆-S-CH₂-CH(CH₃)-(CO)NH-C₃H₆-, -C₃H₆-NH-CH₂-CH(CH₃)-(CO)NH-C₃H₆-, -C₃H₆-NH-C₂H₄-CH₂-CH(CH₃)-(CO)NH-C₃H₆-, -C₁₀H₂₀-COO-CH₂-CH(CH₃)-(CO)NH-C₃H₆-, -C₃H₆-C₆H₄(OCH₃)-O-CH₂-CH(CH₃)-(CO)NH-C₃H₆-, -C₃H₆-O-C₆H₁₀O₄-O-CH₂-CH(CH₃)-(CO)NH-C₃H₆-, -C₃H₆-O-CH₂-CH(CH₃)-(CO)NH-CH₂-CHOH-CH₂-, -C₃H₆-S-CH₂-CH(CH₃)-(CO)NH-CH₂-CHOH-CH₂-, -C₃H₆-NH-CH₂-CH(CH₃)-(CO)NH-CH₂-CHOH-CH₂-, -C₃H₆-NH-C₂H₄-CH₂-CH(CH₃)-(CO)NH-CH₂-CHOH-CH₂-, -C₁₀H₂₀-COO-CH₂-CH(CH₃)-(CO)NH-CH₂-CHOH-CH₂-, -C₃H₆-C₆H₄(OCH₃)-O-CH₂-CH(CH₃)-(CO)NH-CH₂-CHOH-CH₂-, -C₃H₆-O-C₆H₁₀O₄-O-CH₂-CH(CH₃)-(CO)NH-CH₂-CHOH-CH₂-, -C₃H₆-O-CH₂-CH(CH₃)-COO-C₃H₆-, -C₃H₆-S-CH₂-CH(CH₃)-COO-C₃H₆-, -C₃H₆-NH-CH₂-CH(CH₃)-COO-C₃H₆-, -C₃H₆-NH-C₂H₄-CH₂-CH(CH₃)-COO-C₃H₆-, -C₁₀H₂₀-COO-CH₂-CH(CH₃)-COO-C₃H₆-, -C₂H₄-C₆H₄(CH₃)-O-CH₂-CH(CH₃)-COO-C₃H₆-, -C₃H₆-O-C₆H₁₀O₄-O-CH₂-CH(CH₃)-COO-C₃H₆-, -C₃H₆-O-CH₂-CH(CH₃)-COO-CH₂-CHOH-CH₂-(OC₃H₆)₀₋₁₀-, -C₃H₆-S-CH₂-CH(CH₃)-COO-CH₂-CHOH-CH₂-(OC₃H₆)₀₋₁₀-, -C₃H₆-NH-CH₂-CH(CH₃)-COO-CH₂-CHOH-CH₂-(OC₃H₆)₀₋₁₀-, -C₃H₆-NH-C₂H₄-CH₂-CH(CH₃)-COO-CH₂-CHOH-CH₂-(OC₃H₆)₀₋₁₀-, -C₁₀H₂₀-COO-CH₂-CH(CH₃)-COO-CH₂-CHOH-CH₂-(OC₃H₆)₀₋₁₀-, -C₃H₆-C₆H₄(OCH₃)-O-CH₂-CH(CH₃)-COO-CH₂-CHOH-CH₂-(OC₃H₆)₀₋₁₀₋, -C₃H₆-O-C₆H₁₀O₄-O-CH₂-CH(CH₃)-COO-CH₂-CHOH-CH₂-(OC₃H₆)₀₋₁₀-,
-C₃H₆-O-CO-C₂H₄-NH-C₂H₄-, -C₃H₆-O-CO-C₂H₄-N(CH₃)-C₂H₄-, -C₃H₆-O-CO-C₂H₄-NH-C₃H₆-, -C₃H₆-O-CO-C₂H₄-NH-CH₂-CHOH-CH₂-, -C₃H₆-O-CO-C₂H₄-N(t-Bu)-CH₂-CHOH-CH₂-, -C₃H₆-O-CO-C₂H₄-N(C₆H₁₁)-CH₂-CHOH-CH₂-,
-C₃H₆-O-CO-C₂H₄-NH-CH₂-CHOH-CH₂-, -C₃H₆-C-CO-C₂H₄-NH-CH₂-CHOH-CH₂-, -C₃H₆-O-CO-CH(CH₃)CH₂-NH-C₂H₄-, -C₃H₆-O-CO-CH(CH₃)CH₂-N(CH₃)-C₂H₄-, -C₃H₆-O-CO-CH(CH₃)CH₂-NH-C₃H₆-, -C₃H₆-O-CO-CH(CH₃)CH₂-NH-CH₂-CHOH-CH₂-, -C₃H₆-O-CO-CH(CH₃)CH₂-N(t-Bu)-CH₂-CHOH-CH₂-, -C₃H₆-O-CO-CH(CH₃)CH₂-N(C₆H₁₁)-CH₂-CHOH-CH₂-, -C₃H₆-O-CO-CH(CH₃)CH₂-NH-CH₂-CHOH-CH₂-, -C₃H₆-O-CO-CH(CH₃)CH₂-NH-CH₂-CHOH-CH₂-,
-C₃H₆-O-C₂H₄-SO₂-C₆H₄-, -C₃H₆-O-(C₂H₄O)₁₀-C₂H₄-SO₂-C₆H₄-, -C₃H₆-O-C₆H₁₀O₄-O-C₂H₄-SO₂-C₆H₄-, -C₃H₆-C₆H₄(OCH₃)-C₂H₄-SO₂-C₆H₄-, -C₃H₆-S-C₂H₄-SO₂-C₆H₄-, -C₃H₆-NH-C₂H₄-SO₂-C₆H₄-, -C₃H₆-NH-C₂H₄-NH-C₂H₄-SO₂-C₆H₄-, -C₁₀H₂₀-COO-C₂H₄-SO₂-C₆H₄-, -C₃H₆-O-C₂H₄-SO₂-C₃H₆-(OC₂H₄)₀₋₁₀-, -C₃H₆-O-(C₂H₄O)₁₀-C₂H₄-SO₂-C₃H₆-(OC₂H₄)₀₋₁₀-, -C₃H₆-O-C₆H₁₀O₄-O-C₂H₄-SO₂-C₃H₆-(OC₂H₄)₀₋₁₀-, -C₃H₆-C₆H₄(OCH₃)-C₂H₄-SO₂-C₃H₆-(OC₂H₄)₀₋₁₀-, -C₃H₆-S-C₂H₄-SO₂-C₃H₆-(OC₂H₄)₀₋₁₀-, -C₃H₆-NH-C₂H₄-SO₂-C₃H₆-(OC₂H₄)₀₋₁₀-, -C₃H₆-NH-C₂H₄-NH-C₂H₄-SO₂-C₃H₆-(OC₂H₄)₀₋₁₀- , -C₁₀H₂₀-COO-C₂H₄-SO₂-C₃H₆-(OC₂H₄)₀₋₁₀-,
gegebenenfalls substituierte Triazinylenreste, wie z.B. mit Iminopropyl-, Iminoethylaminopropyl-, Oxypropyl-, Mercaptopropyl-, O-Carboxydecyl- und Glycosidoxy-propylrest substituierte Triazinylenreste und 6-ONa-Triazinyl-2,4-enrest, wobei Iminopropyl-, Iminoethylaminopropyl-, Oxypropyl-, Mercaptopropyl- und O-Carboxydecylrest substituierte Triazinylenreste bevorzugt sind.

Die Organosiliciumverbindungen besitzen vorzugsweise ein mittleres Molekulargewicht M_{w} von mindestens 1000 g/mol, besonders bevorzugt 2000 bis 50000 g/mol.

Die Organosiliciumverbindungen sind bei Raumtemperatur, also bei 20°C, bevorzugt flüssig, wachsartig oder fest.

Die Organopolysiloxane weisen bei Raumtemperatur, also bei 20°C, eine Viskosität von vorzugsweise 200 bis 100000 mm²/s, besonders bevorzugt 500 bis 20000 mm²/s, auf.

Falls es sich bei den Cyclodextrinreste aufweisenden Organosiliciumverbindungen um Organosiloxane handelt, sind solche der Formel

A_{f}R_{3-f}SiO(SiR₂O)_{g}(SiRAO)ₕSiR_{3-f}A_{f} (III)

bevorzugt, wobei A und R die oben dafür angegebene Bedeutung haben, f 0 oder 1 ist, g und h jeweils unabhängig voneinander 0 oder eine ganze Zahl von 1 bis 500 sind, mit der Maßgabe, dass mindestens ein Rest A je Molekül enthalten ist und die g Einheiten (SiR₂O) und die h Einheiten (SiRAO) beliebig im Molekül verteilt sein können.

Weitere Beispiele sind außer den Organopolysiloxanen der Formel (III) die entsprechenden cyclischen Verbindungen sowie Mischungen aus den Cyclen und den linearen Verbindungen.

Beispiele für Cyclodextrinreste aufweisende Organosiliciumverbindungen sind 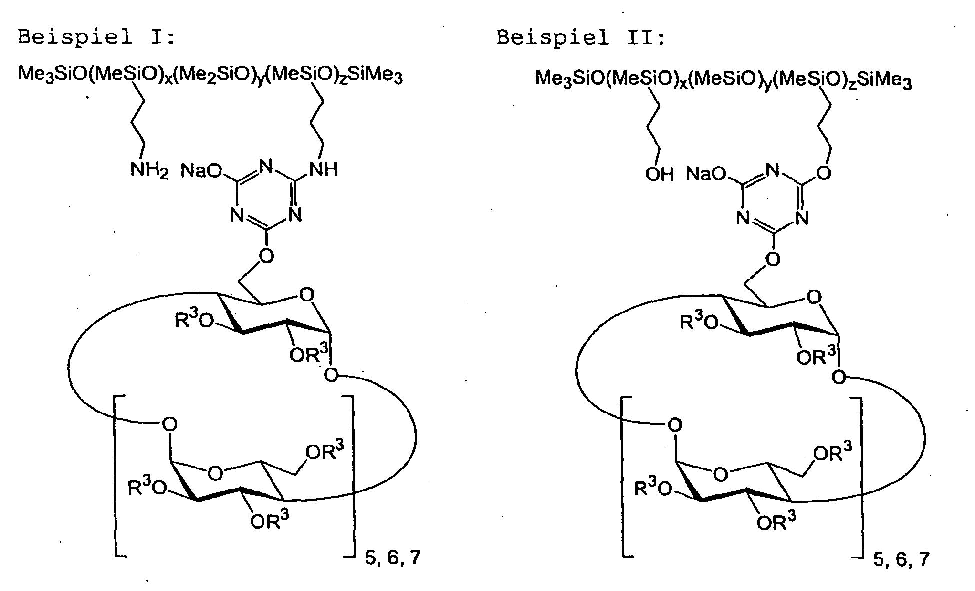 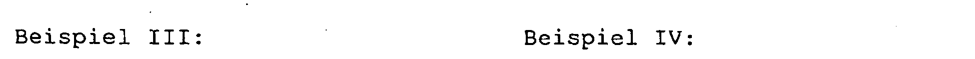 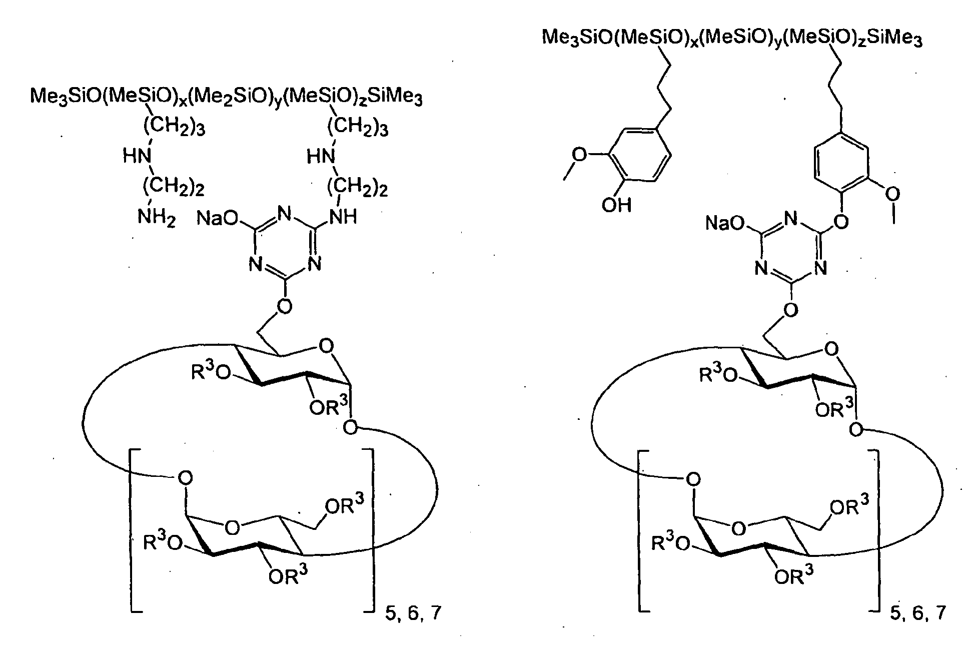 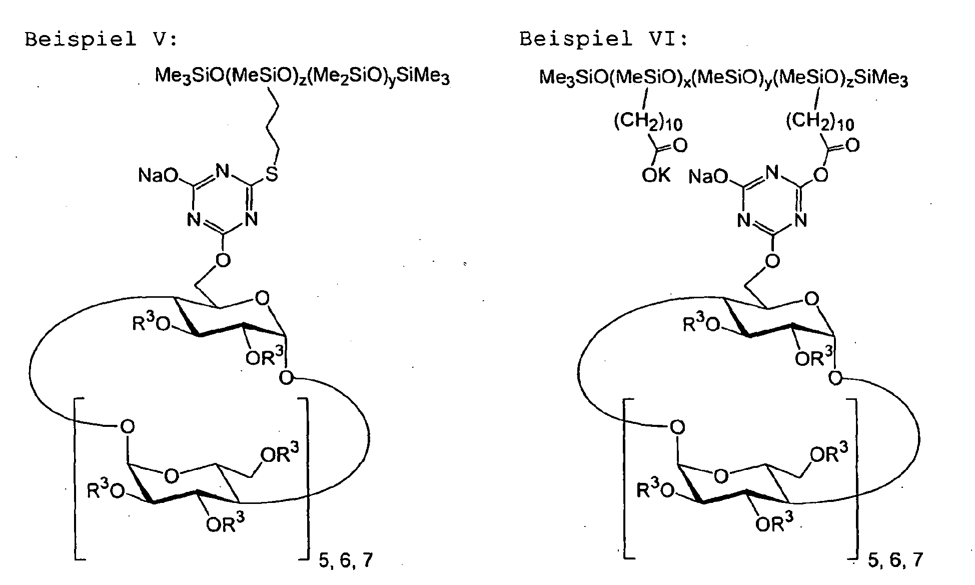 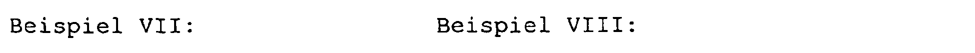 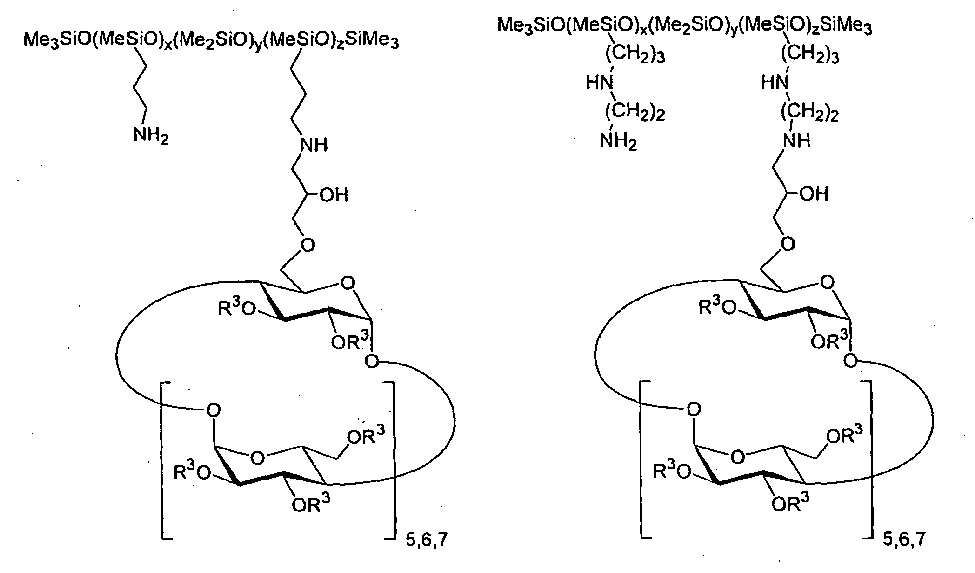 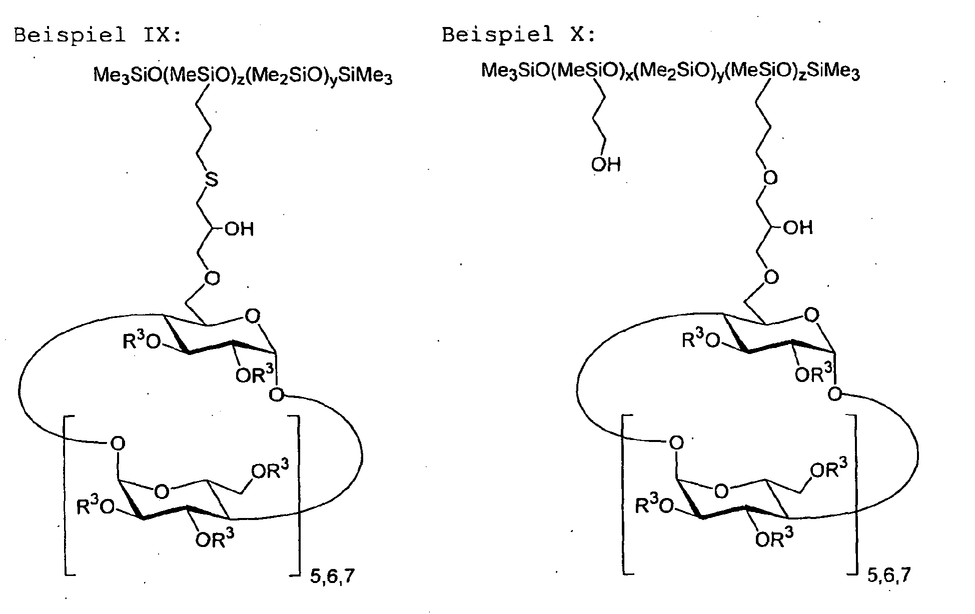 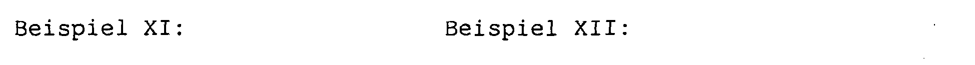 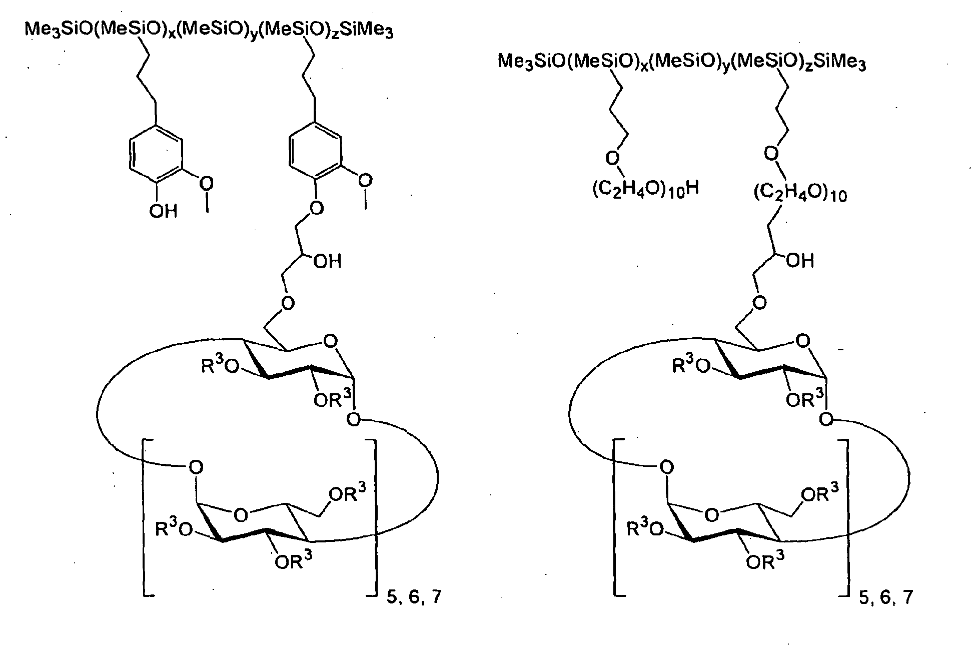 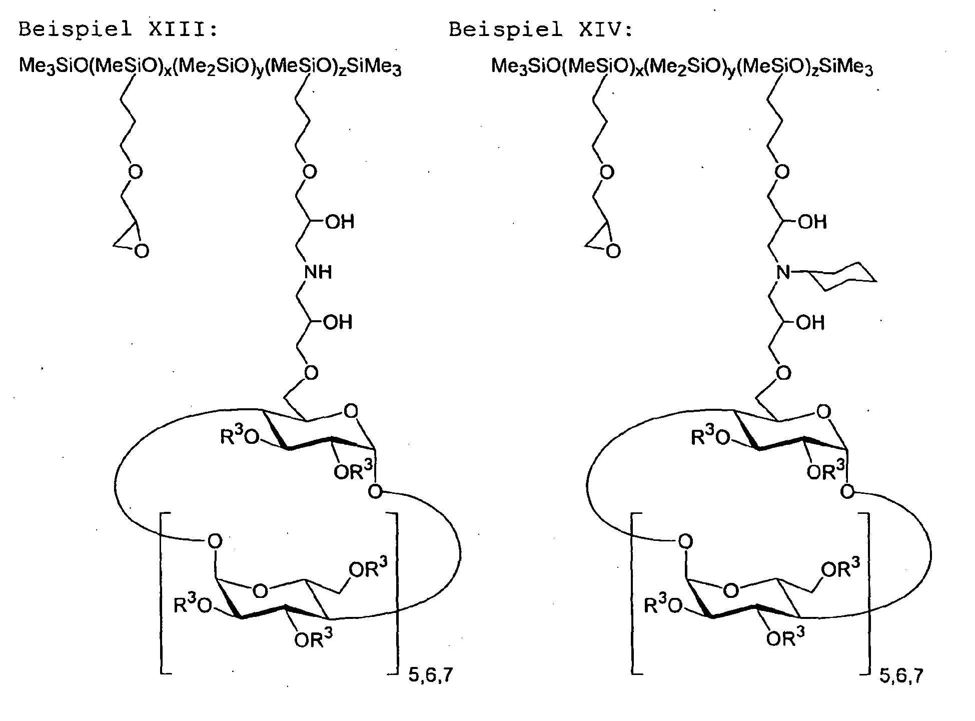 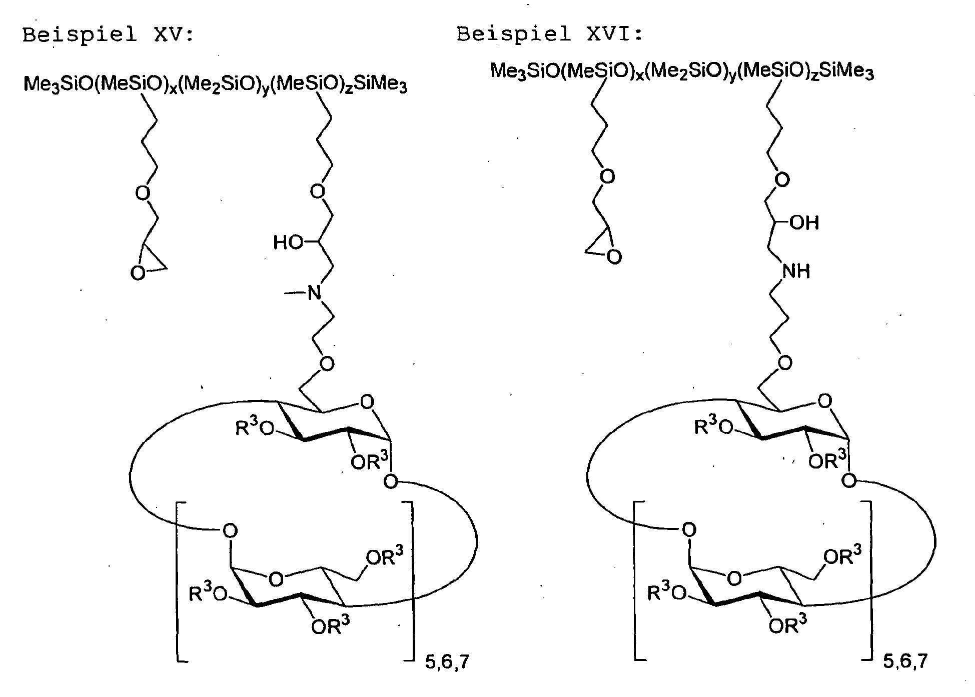 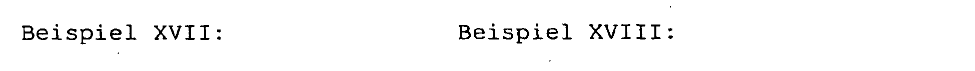 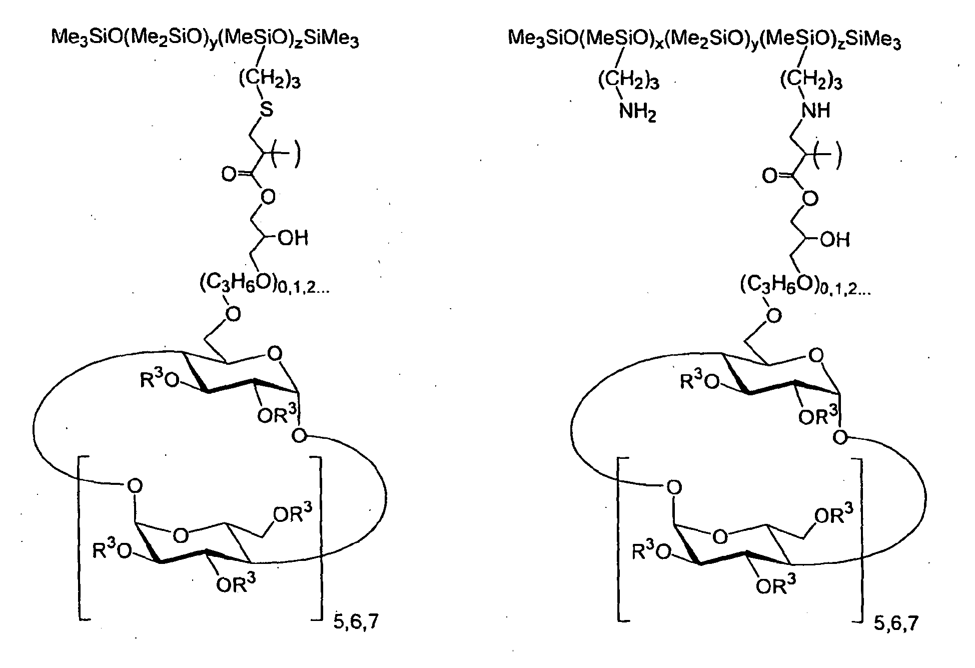 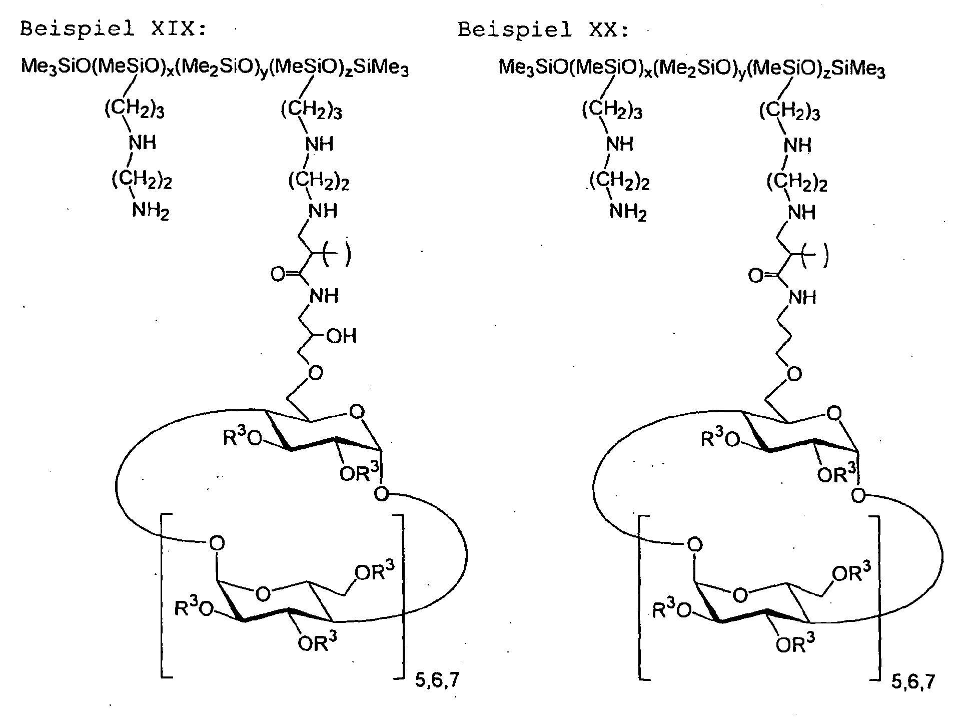 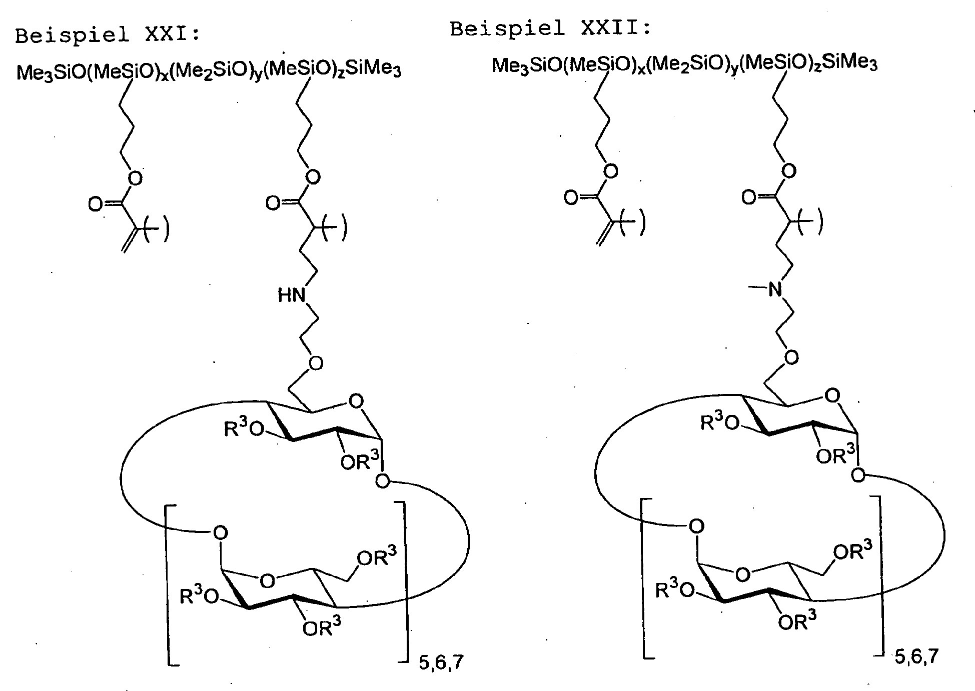 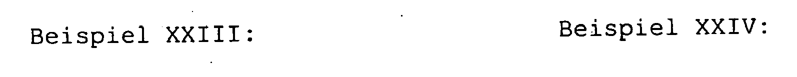 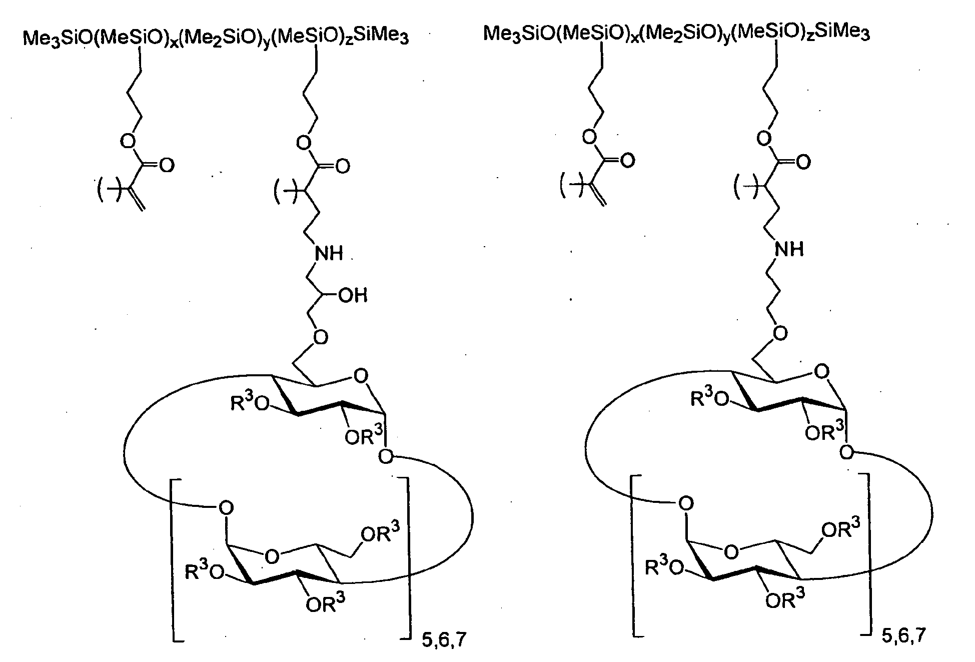 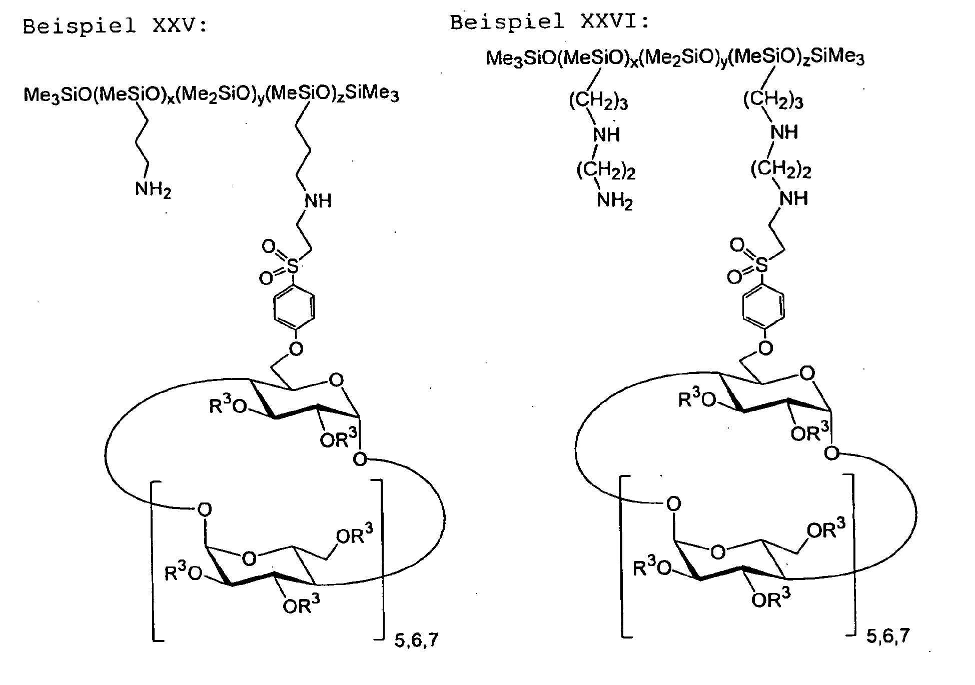 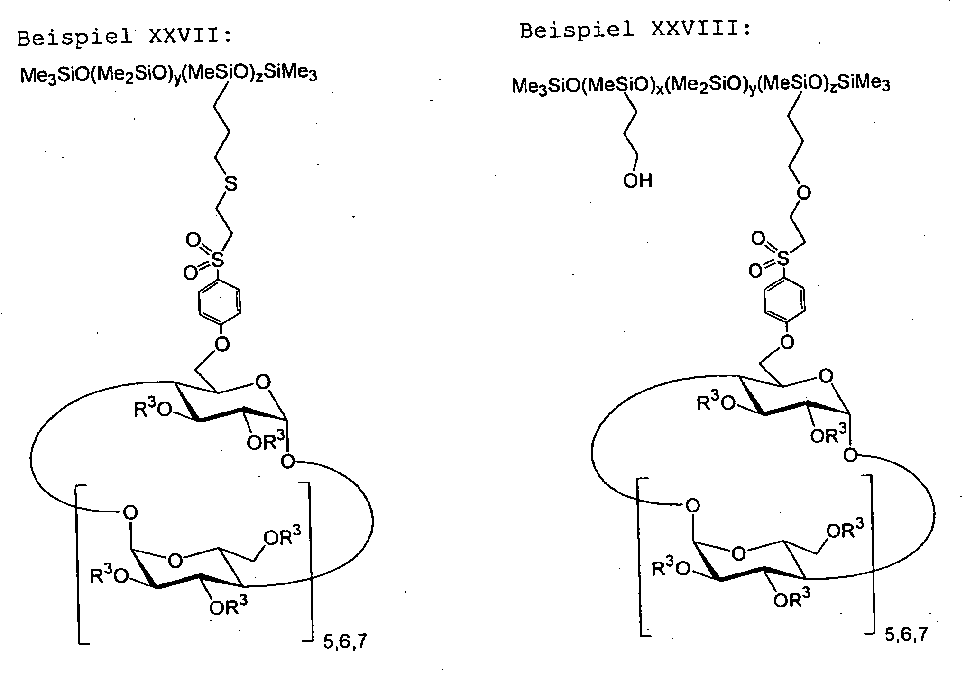 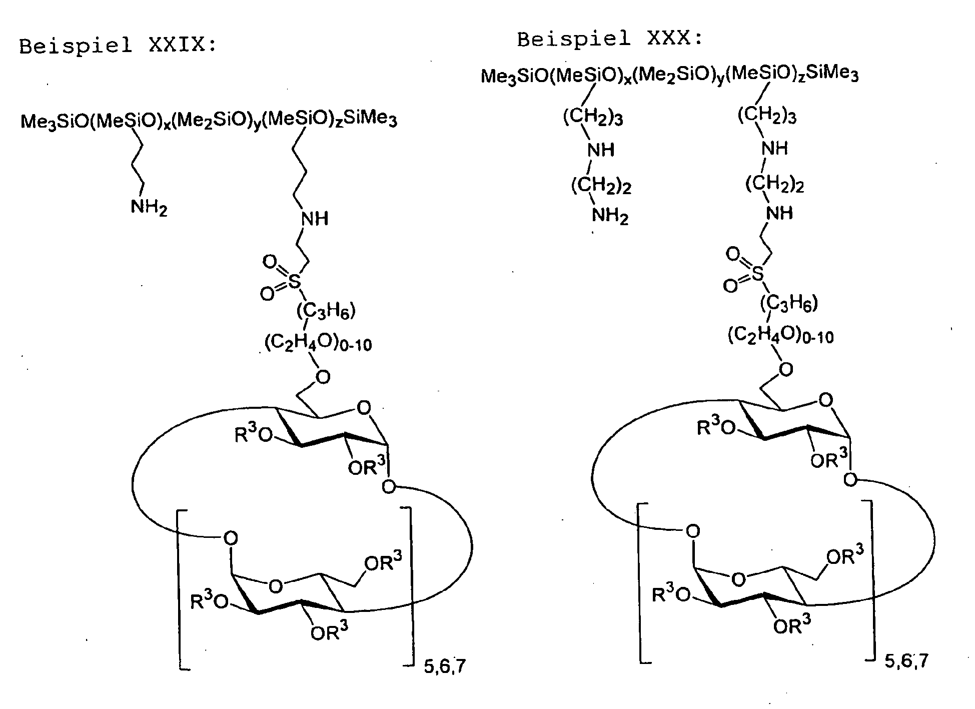 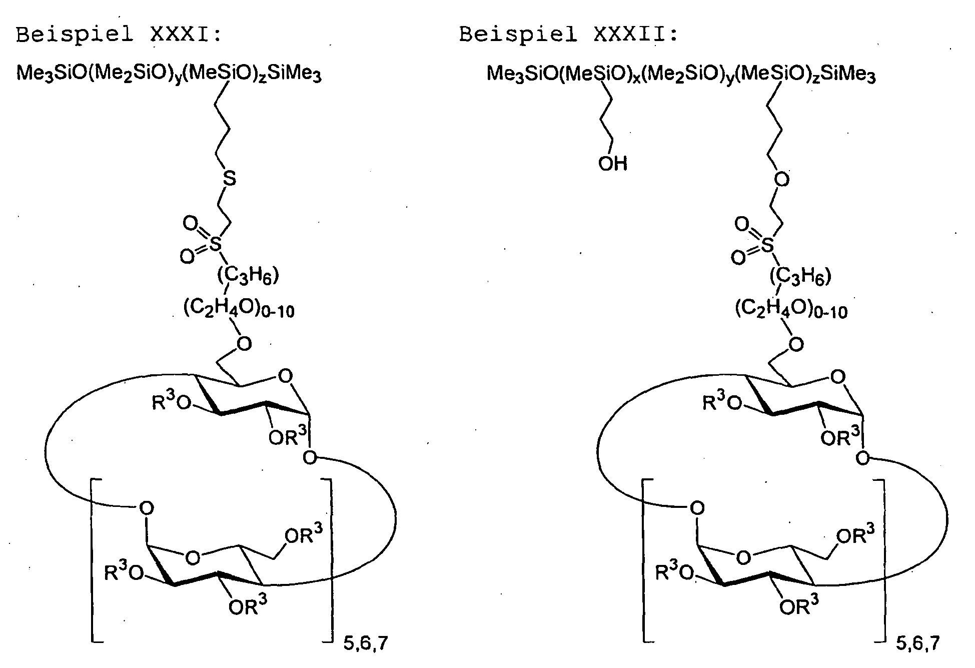 wobei Me für Methylrest steht, R³ gleich oder verschieden sein kann und die obengenannte Bedeutung hat, x eine ganze Zahl zwischen 0 und 10 ist, y eine ganze Zahl von 1 bis 500 ist und z eine ganze Zahl zwischen 0 und 10 ist.

Die Cyclodextrinreste aufweisenden Organosiliciumverbindungen können nach beliebigen Verfahren hergestellt werden, wie etwa durch a) Kondensationsreaktion, b) nucleophile Substitution, z.B. von monochlortriazinfunktionellem Cyclodextrin(derivat) mit Hydroxy-, Mercapto-, Amino- oder Carboxylgruppen aufweisender Organosiliciumverbindung, durch c) Epoxidring-Öffnungsreaktionen, wie z.B. von aminofunktionellem Cyclodextrin(derivat) mit epoxyfunktioneller-Organosiliciumverbindung bzw. epoxyfuntionellem Cyclodextrin(derivat) mit hydroxy-, mercapto- oder aminofunktioneller Organosiliciumverbindung oder d) durch Michael-ähnliche Additionsreaktionen, wie z.B. von aminofunktionellem Cyclodextrin(derivat) mit (meth)acrylfunktioneller Organosiliciumverbindung bzw. von hydroxy-, mercapto- oder aminofunktioneller Organosiliciumverbindung mit (meth)-acrylsäure- und vinylsulfonsäure(derivat)-funktionellem Cyclodextrin (derivat).

Die Organosiliciumverbindungen können jeweils abhängig von den funktionellen Gruppen der Reaktanden auf verschiedene Art und Weise hergestellt werden.

Ein Verfahren (Verfahren 1) zur Herstellung der Organosiliciumverbindungen, besteht darin, dass halogentriazinfunktionelles Cyclodextrin(derivat) mit Amino-, Mercapto-, Hydroxy-, Carboxy-, Anhydrid-, Glycosido-, Phenol-, Polyglycol-, Phosphonato- oder Silalactongruppen aufweisender Organosiliciumverbindung umgesetzt wird.

Bei den eingesetzten Organosiliciumverbindungen kann es sich um beliebige Amino-, Mercapto-, Hydroxy-, Carboxy-, Anhydrid-, Glycosido-, Phenol-, Polyglycol-, Phosphonato- oder Silalactongruppen aufweisende Organosiliciumverbindungen handeln.

Vorzugsweise handelt es sich bei den im Verfahren 1 eingesetzten Organosiliciumverbindungen um solche aus Einheiten der Formel

A¹_{a¹}R_{b}X_{c}H_{d}SiO_{(4-a¹-b-c-d)/2} (I¹),

worin
R, X, b, c und d eine der oben dafür angegebenen Bedeutung haben, A¹ gleich oder verschieden sein kann und einen Amino-, Mercapto-, Hydroxy-, Carboxy-, Anhydrid-, Glycosido-, Phenol-, Polyglycol-, Phosphonato- oder Silalactonrest bedeutet und a¹ eine für a angegebene Bedeutung hat, mit der Maßgabe, dass die Summe a¹+b+c+d ≤ 3 ist und die Organosiliciumverbindung pro Molekül mindestens einen Rest A¹ aufweist.

Bevorzugt handelt es sich bei Rest A¹ um mit Mercapto- oder Hydroxygruppen substituierte Kohlenwasserstoffreste und deren Derivate, wie Mercaptopropyl- und Hydroxypropylrest, mit Aminogruppen substituierte Kohlenwasserstoffreste und deren Derivate, wie Aminopropyl-, Aminopropylaminoethylrest und Cyclohexylaminopropylrest, sowie mit Carbonsäuregruppen bzw. deren Derivaten sustituierte Kohlenwasserstoffreste, wie z.B. mit Alkansäureresten, wie dem Essigsäurerest, dem Buttersäurerest, dem Undecensäurerest, mit Säureanhydriden, wie dem Bernsteinsäureanhydridrest, und mit Estern, wie dem Undecensilylesterrest, wobei mit Aminogruppen substituierte Kohlenwasserstoffreste und deren Derivate, wie Aminopropyl-, Aminopropylaminoethylrest und Cyclohexylaminopropylrest, besonders bevorzugt sind.

Bei den bevorzugten und besonders bevorzugten Spezies der eingesetzten Organosiliciumverbindungen aus Einheiten der Formel (I¹) handelt es sich selbstverständlich um analoge Strukturen wie oben bereits im Zusammenhang mit den Organosiliciumverbindungen beschrieben.

Die eingesetzten Amino-, Mercapto-, Hydroxy-, Carboxy-, Anhydrid-, Glycosido-, Phenol-, Polyglycol-, Phosphonato- oder Silalactongruppen aufweisenden Organosiliciumverbindungen sind handelsübliche Produkte bzw. nach in der Siliciumchemie gängigen Verfahren herstellbar.

Bei dem eingesetzten halogentriazinfunktionellen Cyclodextrin(derivat) kann es sich um ein beliebiges auch bisher bekanntes Cyclodextrin(derivat), das über eine oder mehrere, gleiche oder verschiedene reaktive Halogentriazingruppen verfügt, handeln.

Beispiele für die eingesetzten halogentriazinfunktionellen Cyclodextrin(derivat)e sind solche der allgemeinen Formel 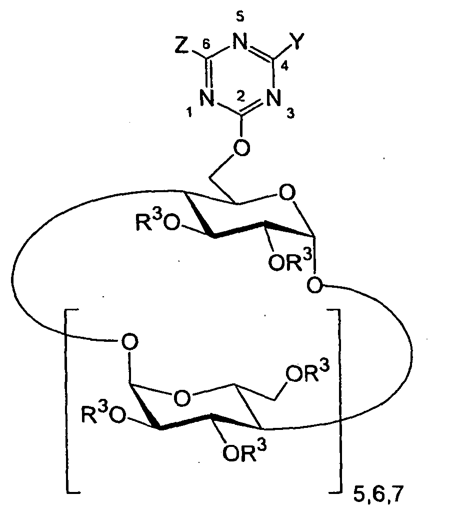 worin
R³ gleich oder verschieden sein kann und eine oben dafür angegebene Bedeutung hat,
Y und Z gleich oder verschieden sein können und Halogenatom, Reste -OR mit R gleich der obengenannten Bedeutung, -OH oder -ONa bedeuten, mit der Maßgabe, dass mindestens einer der Reste Y oder Z die Bedeutung von Halogenatom haben muß.

Bei den eingesetzten halogentriazinfunktionellen Cyclodextrin (derivat) en sind solche bevorzugt, welche in 4-und 6-Position des Halogentriazinringes Fluor- oder Chlorsubstituenten sowie höchstens eine OH- oder ONa-Gruppe tragen. Besonders bevorzugt ist das (4-Chlor-6-ONa-Triazinyl)-Cyclodextrin(derivat).

Die eingesetzten halogentriazinfunktionellen Cyclodextrin(derivat)e sind handelsübliche Produkte bzw. nach in der Chemie gängigen Verfahren herstellbar.

Bei dem Verfahren 1 wird halogentriazinfunktionelles Cyclodextrin(derivat) in Mengen von bevorzugt 0,1 bis 90 Gewichtsprozent, besonders bevorzugt 0,1 bis 50 Gewichtsprozent, insbesondere 1 bis 30 Gewichtsprozent, jeweils bezogen auf das Gesamtgewicht der eingesetzten Amino-, Mercapto-, Hydroxy-, Carboxy-, Anhydrid-, Glycosido-, Phenol-, Polyglycol-, Phosphonato- oder Silalactongruppen aufweisender Organosiliciumverbindung, eingesetzt, wobei die molare Cyclodxtrinmenge maximal 95 mol-% der oben beschriebenen funktionellen Gruppen in der eingesetzten Organosiliciumverbindung betragen darf.

Das Verfahren 1 kann mit oder ohne Katalyse erfolgen, wobei die basische Katalyse bevorzugt ist.

Als gegebenenfalls eingesetzter Katalysator eignen sich alle bekannten Verbindungen, welche die Nucleophilie der Gruppe A¹ der eingesetzten Organosiliciumverbindungen durch Deprotonierung erhöhen. Beispiele für solche Katalysatoren sind Benzyltrimethylammoniumhydroxid, Tetramethylammoniumhydroxid, Alkalihydroxid und Erdalkalihydroxid, Alkalialkoholate und Alkaliamide, wobei Alkalihydroxide bevorzugt sind.

Falls bei dem Verfahren 1 Katalysatoren eingesetzt werden, handelt es sich um Mengen von bevorzugt 0,001 bis 1 Mol, bezogen auf ein Mol reaktiver Gruppe A¹ der eingesetzten Organosiliciumverbindung aus Einheiten der Formel (I¹) .

Ein weiteres Verfahren (Verfahren 2) zur Herstellung de Organosiliciumverbindungen, besteht darin, dass epoxyfuntionelles Cyclodextrin(derivat) mit Amino-, Mercapto-, Carboxy-, Anhydrid-, Hydroxy-, Glycosido-, Phenol-, Polyglycol-, Phosphonato- oder Silalactongruppen aufweisender Organosiliciumverbindung umgesetzt wird.

Bei den eingesetzten Organosiliciumverbindungen kann es sich um beliebige Amino-, Mercapto-, Carboxy-, Anhydrid-, Hydroxy-, Glycosido-, Phenol-, Polyglycol-, Phosphonato- oder Silalactongruppen aufweisende Organosiliciumverbindungen handeln.

Vorzugsweise handelt es sich bei den im Verfahren 2 eingesetzten Organosiliciumverbindungen um solche aus Einheiten der Formel

A²_{a²}R_{b}X_{c}H_{d}SiO_{(4-a²-b-c-d) /2} (I²),

worin
R, X, b, c und d die oben dafür angegebene Bedeutung haben, A² gleich oder verschieden sein kann und einen Amino-, Mercapto-, Carboxy-, Anhydrid-, Hydroxy-, Glycosido-, Phenol-, Polyglycol-, Phosphonato- oder Silalactongruppen bedeutet und a² eine für a angegebene Bedeutung hat, mit der Maßgabe, dass die Summe a²+b+c+d ≤ 4 ist und die Organosiliciumverbindung pro Molekül mindestens einen Rest A² aufweist.

Bevorzugt handelt es sich bei Rest A² um mit Mercapto- oder Hydroxygruppen substituierte Kohlenwasserstoffreste und deren Derivate, wie Mercaptopropyl- und 3-Hydroxy-3-methyl-butylrest, Aminogruppen substituierte Kohlenwasserstoffreste und deren Derivate, wie Aminopropyl-, Aminopropylaminoethylrest und Cyclohexylaminopropylrest, sowie mit Carbonsäuregruppen bzw. deren Derivaten sustituierte Kohlenwasserstoffreste, wie z.B. mit Alkansäureresten, wie dem Essigsäurerest, dem Buttersäurerest, dem Undecensäurerest, mit Säureanhydriden, wie dem Bernsteinsäureanhydridrest, und mit Estern, wie dem Undecensilylesterrest, wobei mit Aminogruppen substituierte Kohlenwasserstoffreste und deren Derivate, wie Aminopropyl-, Aminopropylaminoethylrest und Cyclohexylaminopropylrest besonders bevorzugt sind.

Bei den bevorzugten und besonders bevorzugten Spezies der eingesetzten Organosiliciumverbindungen aus Einheiten der Formel (I²) handelt es sich selbstverständlich um analoge Strukturen wie oben bereits im Zusammenhang mit den Organosiliciumverbindungen beschrieben.

Die eingesetzten Amino-, Mercapto-, Carboxy-, Anhydrid-, Hydroxy-, Glycosido-, Phenol-, Polyglycol-, Phosphonato- oder Silalactongruppen aufweisenden Organosiliciumverbindungen sind handelsübliche Produkte bzw. nach in der Siliciumchemie gängigen Verfahren herstellbar.

Bei dem eingesetzten epoxyfunktionellen Cyclodextrin(derivat) kann es sich um ein beliebiges auch bisher bekanntes Cyclodextrin(derivat), das über eine oder mehrere, gleiche oder verschiedene epoxyfunktionelle Gruppen verfügt, handeln.

Beispiele für die eingesetzten epoxyfunktionellen Cyclodextrin (derivat) e sind Glycidoxypropyl-Cyclodextrin, 4,5-Epoxypentyl-Cyclodextrin, 6,7-Epoxyheptyl-Cyclodextrin und 8,10-Epoxyundecyl-Cyclodextrin, wobei das Glycidoxypropyl-Cyclodextrin bevorzugt ist.

Die eingesetzten epoxyfunktionellen Cyclodextrin(derivat)e sind handelsübliche Produkte bzw. nach in der Chemie gängigen Verfahren herstellbar.

Bei dem Verfahren 2 wird epoxyfunktionelles Cyclodextrin (derivat) in Mengen von bevorzugt 0,1 bis 90 Gewichtsprozent, besonders bevorzugt 1 bis 50 Gewichtsprozent, insbesondere 1 bis 30 Gewichtsprozent, jeweils bezogen auf das Gesamtgewicht der eingesetzten Amino-, Mercapto-, Carboxy-, Anhydrid-, Hydroxy-, Glycosido-, Phenol-, Polyglycol-, Phosphonato- oder Silalactongruppen aufweisenden Organosiliciumverbindung, eingesetzt, wobei die molare Cyclodxtrinmenge maximal 95 mol-% der oben beschriebenen funktionellen Gruppen in der eingesetzten Organosiliciumverbindung betragen darf.

Das Verfahren 2 kann mit oder ohne Katalyse erfolgen, wobei mit Katalyse bevorzugt ist.

Als gegebenenfalls eingesetzter Katalysator eignen sich alle bekannten Verbindungen, die Epoxidring-Öffnungsreaktionen katalysieren, wie z.B. Brønsted-Säuren, wie Phosphorsäure, Schwefelsäure, Salzsäure, Eisessig und Ameisensäure, Lewis-Säuren, wie Litiumperchlorat, Zinktetrafluoroborat, Eisen(II)chlorid und Zinn(IV)chlorid, Brønsted-Basen, wie z.B. Natriummethylat und Alkaliamide, sowie Ammoniumchlorid, Tetraalkylammoniumbromide und Alkaliiodide.

Falls bei dem Verfahren Katalysatoren eingesetzt werden, handelt es sich um Mengen um bevorzugt 0,0001 bis 1 Mol, insbesondere 0,001 bis 0,5 Mol, jeweils bezogen auf ein Mol Epoxidgruppe des eingesetzten epoxyfunktionellen Cyclodextrin(derivat)s verwendet.

Ein weiteres Verfahren (Verfahren 3) zur Herstellung der Organosiliciumverbindungen, besteht darin, dass aminofuntionelles Cyclodextrin (derivat) mit epoxyfunktionellem Polysiloxan umgesetzt wird.

Bei den eingesetzten Organosiliciumverbindungen kann es sich um beliebige Epoxygruppen aufweisende Organosiliciumverbindungen handeln.

Vorzugsweise handelt es sich bei den im Verfahren 3 eingesetzten Organosiliciumverbindungen um solche aus Einheiten der Formel

A³_{a³}R_{b}X_{c}H_{d}SiO_{(4-a³-b-c-d)/2} (I³),

worin
R, X, b, c und d die oben dafür angegebene Bedeutung haben, A³ einen epoxyfunktionellen Rest bedeutet und a³ eine für a angegebene Bedeutung hat, mit der Maßgabe, dass die Summe a³+b+c+d ≤ 4 ist und die Organosiliciumverbindung pro Molekül mindestens einen Rest A³ aufweist.

Bevorzugt handelt es sich bei Rest A³ um epoxyfunktionelle Reste mit 1 bis 18 Kohlenstoffatomen, wobei der 3-Glycidoxypropylrest besonders bevozugt ist.

Bei den bevorzugten und besonders bevorzugten Spezies der eingesetzten Organosiliciumverbindungen aus Einheiten der Formel (I³) handelt es sich selbstverständlich um analoge Strukturen wie oben bereits im Zusammenhang mit den Organosiliciumverbindungen beschrieben. Die eingesetzten epoxyfunktionellen Organosiliciumverbindungen sind handelsübliche Produkte bzw. nach in der Siliciumchemie gängigen Verfahren herstellbar.

Bei dem eingesetzten aminofunktionellen Cyclodextrin(derivat) kann es sich um ein beliebiges auch bisher bekanntes Cyclodextrin(derivat), das über eine oder mehrere, gleiche oder verschiedene mit Aminogruppen und deren Derivate substituierte Kohlenwasserstoffreste, wie z.B. den β-Aminoethyl-, β-(N-Methyl)aminoethyl-, β-(N-Ethyl)aminoethyl-, γ-Aminopropyl-, γ-Amino-2-hydroxy-propyl-, γ-(N-Methyl)amino-2-hydroxy-propyl-, γ-(N-Ethyl)amino-2-hydroxy-propyl-, γ-(N-tert.-Butyl)amino-2-hydroxy-propyl-, γ-(N-Cyclohexyl)amino-2-hydroxypropyl-, 3-(γ-Amino-2-hydroxy-propyloxy-)propyl- und 3-{γ-(N-Ethyl)amino-2-hydroxy-propyloxy-}propyl-rest, verfügt, handeln.

Bevorzugt handelt es sich bei dem mit Aminogruppen und deren Derivate substituierten Kohlenwasserstoffrest, welche das erfingsgemäß eingesetzte Cyclodextrin(derivat) aufweist, um den β-aminomethyl-, β-(N-Methyl)aminoethyl-, γ-Aminopropyl-, γ-(N-tert.-Butyl)amino-2-hydroxy-propyl- und γ-(N-Cyclohexyl)amino-2-hydroxy-propyl-rest.

Die eingesetzten aminofunktionellen Cyclodextrin(derivat)e sind handelsübliche Produkte bzw. nach in der Chemie gängigen Verfahren herstellbar.

Bei dem Verfahren 3 wird aminofunktionelles Cyclodextrin(derivat) in Mengen von bevorzugt 0,1 bis 90, besonders bevorzugt 1 bis 50, insbesondere 1 bis 30 Gewichtsprozent, jeweils bezogen auf das Gesamtgewicht der eingesetzten Epoxygruppen aufweisenden Organosiliciumverbindung, eingesetzt, wobei die molare Cyclodxtrinmenge maximal 95 mol-% der epoxyfunktionellen Gruppen in der eingesetzten Organosiliciumverbindung betragen, darf.

Das Verfahren 3 kann mit oder ohne Katalyse erfolgen, wobei mit Katalyse bevorzugt ist.

Als Katalysator eignen sich alle bekannten Verbindungen, die Epoxidring-Öffnungsreaktionen katalysieren, wie z.B. Brønsted-Säuren, wie Phosphorsäure, Schwefelsäure, Salzsäure, Eisessig und Ameisensäure, Lewis-Säuren, wie Litiumperchlorat, Zinktetrafluoroborat, Eisen(II)chlorid und Zinn (IV) chlorid, Brosnsted-Basen, wie z.B. Natriummethylat und Alkaliamide, sowie Ammoniumchlorid, Tetraalkylammoniumbromide und Alkaliiodide.

Falls bei dem Verfahren 3 Katalysatoren eingesetzt werden, handelt es sich um Mengen von bevorzugt 0,0001 bis 1 Mol, insbesondere 0,001 bis 0,5 Mol, jeweils bezogen auf ein Mol Epoxidgruppe des eingesetzten Organopolysiloxans verwendet.

Ein weiteres Verfahren **(Verfahren 4)** zur Herstellung der Organosiliciumverbindungen, dadurch gekennzeichnet, dass ein vinylsulfonylfunktionelles Cyclodextrin(derivat) oder ein Cyclodextrin(derivat), welches über vinylsulfonylderivat-Funktionen, wie 2-Sulfooxyethyl-sulfonyl- und 2-Chlorethyl-sulfonylgruppen verfügt, mit Amino-, Mercapto-, Hydroxy-, Carboxy-, Anhydrid-, Glycosido-, Phenol-, Polyglycol-, Phosphonato- oder Silalactongruppen aufweisender Organosiliciumverbindung umgesetzt wird.

Bei den eingesetzten Organosiliciumverbindungen kann es sich um beliebige Amino-, Mercapto-, Hydroxy-, Carboxy-, Anhydrid-, Glycosido-, Phenol-, Polyglycol-, Phosphonato- oder Silalactongruppen aufweisende Organosiliciumverbindungen handeln.

Vorzugsweise handelt es sich bei den im Verfahren 4 eingesetzten Organosiliciumverbindungen um solche aus Einheiten der Formel

A⁴_{a⁴}R_{b}X_{c}H_{d}SiO_{(4-a⁴-b-c-d)/2} (I⁴),

worin
R, X, b, c und d die oben dafür angegebene Bedeutung haben, A⁴ gleich oder verschieden sein kann und einen Amino-, Mercapto-, Hydroxy -, Carboxy-, Anhydrid-, Glycosido-, Phenol-, Polyglycol-, Phosphonato- oder Silalactonrest bedeutet und a⁴ eine für a angegebene Bedeutung hat, mit der Maßgabe, dass die Summe a⁴+b+c+d ≤ 4 ist und die Organosiliciumverbindung pro Molekül mindestens einen Rest A⁴ aufweist.

Bevorzugt handelt es sich bei Rest A⁴ um mit Mercapto- oder Hydroxygruppen substituierte Kohlenwasserstoffreste und deren Derivate, wie Mercaptopropyl- und Hydroxypropylrest, Aminogruppen substituierte Kohlenwasserstoffreste und deren Derivate, wie Aminopropyl-, Aminopropylaminoethylrest und Cyclohexylaminopropylrest, sowie mit Carbonsäuregruppen bzw. deren Derivaten sustituierte Kohlenwasserstoffreste, wie z.B. mit Alkansäureresten, wie dem Essigsäurerest, dem Buttersäurerest, dem Undecensäurerest, mit Säureanhydriden, wie dem Bernsteinsäureanhydridrest, und mit Estern, wie dem Undecensilylesterrest, wobei mit Aminogruppen substituierte Kohlenwasserstoffreste und deren Derivate, wie Aminopropyl-, Aminopropylaminoethylrest und Cyclohexylaminopropylrest besonders bevorzugt sind.

Bei den bevorzugten und besonders bevorzugten Spezies der eingesetzten Organosiliciumverbindungen aus Einheiten der Formel (I⁴) handelt es sich selbstverständlich um analoge Strukturen wie oben bereits im Zusammenhang mit den Organosiliciumverbindungen beschrieben. Die eingesetzten Amino-, Mercapto-, Hydroxy-, Carboxy-, Anhydrid-, Glycosido-, Phenol-, Polyglycol-, Phosphonato- oder Silalactongruppen aufweisenden Organosiliciumverbindungen sind handelsübliche Produkte bzw. nach in der Siliciumchemie gängigen Verfahren herstellbar.

Bei dem eingesetzten vinylsulfonylfunktionellen Cyclodextrin(derivat) bzw. Cyclodextrin(derivat), welches über vinylsulfonylderivat-Funktionen, wie 2-Sulfooxyethyl-sulfonyl- und 2-Chlorethyl-sulfonylgruppen verfügt, kann es sich um ein beliebiges auch bisher bekanntes Cyclodextrin(derivat), das über eine oder mehrere, gleiche oder verschiedene reaktive Vinylsulfonylgruppen oder Vinylsulfonylgruppen-Derivate, wie 2-Sulfooxyethyl-sulfonyl- und 2-Chlorethylsulfonylgruppen, verfügt, handeln.

Beispiele für die eingesetzten vinylsulfonylfunktionellen bzw. 2-Sulfooxyethyl-sulfonyl- oder 2-Chlorethyl-sulfonyl-funktionellen Cyclodextrin(derivat)e sind solche der allgemeinen Formel 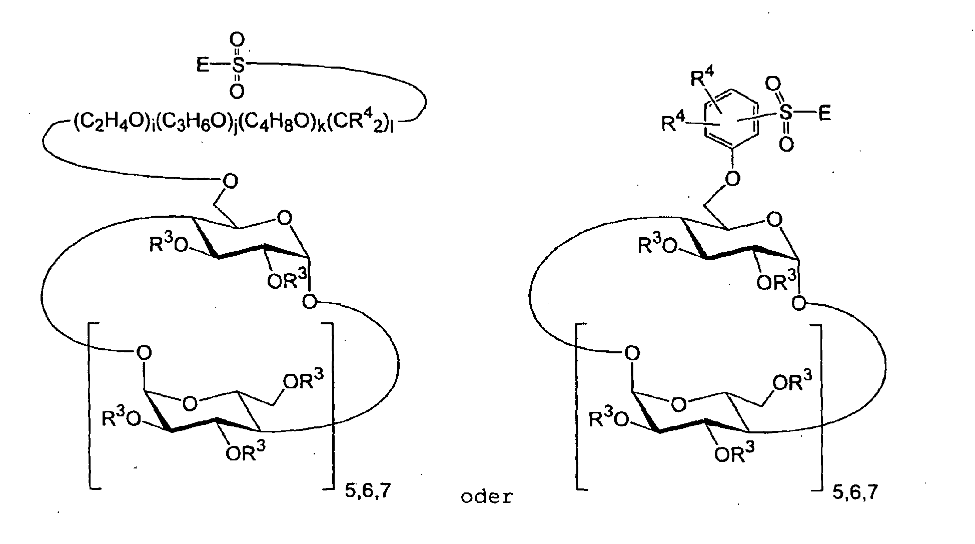 worin
R³ gleich oder verschieden sein kann und eine der oben dafür angegebenen Bedeutungen hat,
R⁴ gleich oder verschieden sein kann und Wasserstoffatom oder eine oben für R angegebene Bedeutung hat,
E -CH=CH₂, -C₂H₄-OSO₃H oder -C₂H₄-Cl ist,
i, j und k gleich oder verschieden sein können und 0 oder eine ganze Zahl von 1 bis 100, bevorzugt 0 oder eine ganze Zahl von 1 bis 20, bedeuten und
l 0 oder eine ganze Zahl von 1 bis 35, bevorzugt 0 oder eine ganze Zahl von 1 bis 12, ist.

Bevorzugt handelt es sich bei den eingesetzten vinylsulfonylfunktionellen bzw. 2-Sulfooxyethyl-sulfonyl-oder 2-Chlorethyl-sulfonyl-funktionellen Cyclodextrin (derivat)en um 3-(Vinylsulfonyl)-propyloxy-Cyclodextrin, Vinylsulfonoyl-Cyclodextrin, (2-Sulfooxyethyl) sulfonoyl-Cyclodextrin, (2-Chloroethyl)sulfonoyl-Cyclodextrin, *p*-Vinylsulfonyl-phenoxy-Cyclodextrin und *p*-(2-Sulfooxyethyl)sulfonyl-phenoxy-Cyclodextrin, sowie um polypropoxylierte Cyclodextrine, welche in ω-Position der Polyethergruppe eine Vinyl-sulfonoyl-, (2-Sulfooxyethyl)-sulfonoyl- oder (2-Chloroethyl)sulfonoyl-Gruppe tragen.

Die eingesetzten vinylsulfonylfunktionellen bzw. 2-Sulfooxyethyl-sulfonyl- oder 2-Chlorethyl-sulfonyl-funktionellen Cyclodextrin(derivat)e aminofunktionellen Cyclodextrin(derivat)e sind handelsübliche Produkte bzw. nach in der Chemie gängigen Verfahren herstellbar.

Bei dem Verfahren 4 wird eingesetztes vinylsulfonylfunktionelles bzw. 2-Sulfooxyethylsulfonyl- oder 2-Chlorethyl-sulfonyl-funktionelles Cyclodextrin (derivat) in Mengen von bevorzugt 0,1 bis 90 Gewichtsprozent, besonders bevorzugt 1 bis 50 Gewichtsprozent, insbesondere 1 bis 30 Gewichtsprozent, jeweils bezogen auf das Gesamtgewicht der eingesetzten Amino-, Mercapto-, Hydroxy-, Carboxy-, Anhydrid-, Glycosido-, Phenol-, Polyglycol-, Phosphonato- oder Silalactongruppen aufweisenden Organosiliciumverbindung, eingesetzt, wobei die molare Cyclodxtrinmenge maximal 95 mol-% der epoxyfunktionellen Gruppen in der eingesetzten Organosiliciumverbindung betragen darf.

Das Verfahren 4 kann mit oder ohne Katalyse erfolgen, wobei als Katalysator alle bekannten Verbindungen, die Michael-ähnliche Additionsreaktionen katalysieren, eingesetzt werden können.

Bevorzugt wird das Verfahren 4 mit Katalyse durchgeführt, wobei die basische Katalyse besonders bevorzugt ist.

Zur sauren Katalyse können Brønsted-Säuren, wie Phosphorsäure, Schwefelsäure, Salzsäure, Eisessig, Propion- und Ameisensäure, oder deren wässrigen Lösungen sowie Lewis-Säuren, wie Litiumperchlorat, Zinktetrafluoroborat, Eisen(II)chlorid und Zinn (IV) chlorid, verwendet werden.

Als basische Katalysator eignen sich alle bekannten Verbindungen, welche die Nucleophilie der Gruppe A⁴ der eingesetzten Organosiliciumverbindungen durch Deprotonierung erhöhen, wie z.B. Benzyltrimethylammoniumhydroxid, Tetramethylammoniumhydroxid, Alkalihydroxid und Erdalkalihydroxid, Alkalialkoholate und Alkaliamide, wobei Alkalihydroxide bevorzugt sind.

Falls bei dem Verfahren 4 Katalysatoren eingesetzt werden, handelt es sich um Mengen von vorzugsweise 0,001 bis 1 Mol je Mol reaktiver Gruppe A⁴ der erfindungsgemäß eingesetzten Organosiliciumverbindung.

Ein weiteres Verfahren (Verfahren 5) zur Herstellung der Organosiliciumverbindungen, besteht darin, dass acryl- oder methacrylfuntionelles Cyclodextrin(derivat) mit Amino-, Mercapto-, Hydroxy-, Carboxy-, Anhydrid-, Glycosido-, Phenol-, Polyglycol-, Phosphonato- oder Silalactongruppen aufweisendem Organopolysiloxan umgesetzt wird.

Bei den eingesetzten Organosiliciumverbindungen kann es sich um beliebige Amino-, Mercapto-, Hydroxy-, Carboxy-, Anhydrid-, Glycosido-, Phenol-, Polyglycol-, Phosphonato- oder Silalactongruppen aufweisende Organosiliciumverbindungen handeln.

Vorzugsweise handelt es sich bei den im Verfahren 5 eingesetzten Organosiliciumverbindungen um solche aus Einheiten der Formel

A⁵_{a⁵}R_{b}X_{c}H_{d}SiO_{(4-a⁵-b-c-d)/2} (I⁵),

worin
R, X, b, c und d die oben dafür angegebene Bedeutung haben, A⁵ gleich oder verschieden sein kann und einen Amino-, Mercapto-, Hydroxy-, Carboxy-, Anhydrid-, Glycosido-, Phenol-, Polyglycol-, Phosphonato- oder Silalactonrest bedeutet und a⁵ eine für a angegebene Bedeutung hat, mit der Maßgabe, dass die Summe a⁵+b+c+d ≤ 4 ist, und die Organosiliciumverbindung pro Molekül mindestens einen Rest A⁵ aufweist.

Bevorzugt handelt es sich bei Rest A⁵ um mit Mercapto- oder Hydroxygruppen substituierte Kohlenwasserstoffreste und deren Derivate, wie Mercaptopropyl- und Hydroxypropylrest, Aminogruppen substituierte Kohlenwasserstoffreste und deren Derivate, wie Aminopropyl-, Aminopropylaminoethylrest und Cyclohexylaminopropylrest, sowie mit Carbonsäuregruppen bzw. deren Derivaten sustituierte Kohlenwasserstoffreste, wie z.B. mit Alkansäureresten, wie dem Essigsäurerest, dem Buttersäurerest, dem Undecensäurerest, mit Säureanhydriden, wie dem Bernsteinsäureanhydridrest, und mit Estern, wie dem Undecensilylesterrest, wobei mit Aminogruppen substituierte Kohlenwasserstoffreste und deren Derivate, wie Aminopropyl-, Aminopropylaminoethylrest und Cyclohexylaminopropylrest besonders bevorzugt sind.

Bei den bevorzugten und besonders bevorzugten Spezies der eingesetzten Organosiliciumverbindungen aus Einheiten der Formel (I⁵) handelt es sich selbstverständlich um analoge Strukturen wie oben bereits im Zusammenhang mit den Organosiliciumverbindungen beschrieben.

Die eingesetzten Amino-, Mercapto-, Hydroxy-, Carboxy-, Anhydrid-, Glycosido-, Phenol-, Polyglycol-, Phosphonato- oder Silalactongruppen aufweisenden Organosiliciumverbindungen sind handelsübliche Produkte bzw. nach in der Siliciumchemie gängigen Verfahren herstellbar.

Bei dem eingesetzten acryl- oder methacrylfuntionellen Cyclodextrin(derivat) kann es sich um ein beliebiges auch bisher bekanntes Cyclodextrin(derivat), das über eine oder mehrere, gleiche oder verschiedene reaktive Acryl- oder Methacrylgruppen verfügt, handeln.

Beispiele für die eingesetzten acryl- oder methacrylfuntionellen Cyclodextrin(derivat)e sind solche der allgemeinen Formeln 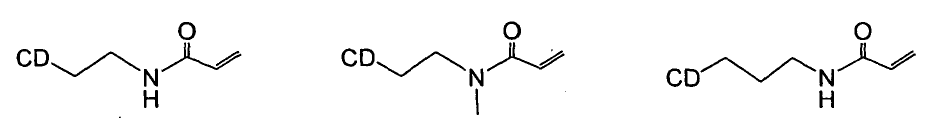 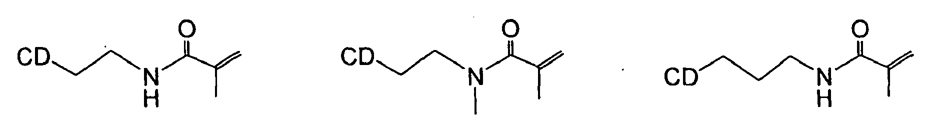 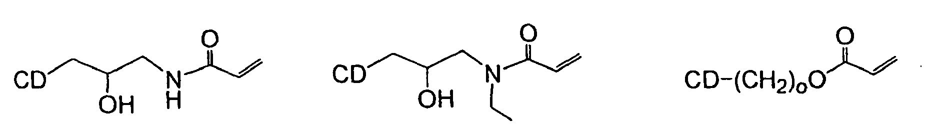 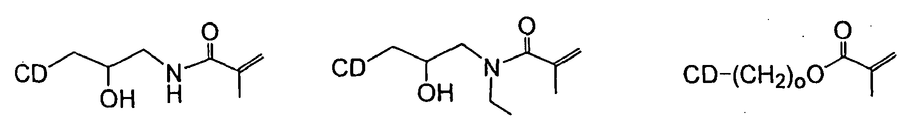 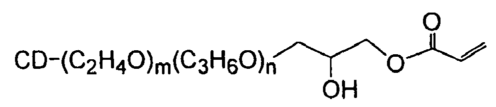 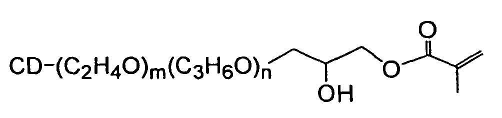 worin
CD die oben dafür angegebene Bedeutung hat,
m und n gleich oder verschieden sein können und eine ganze Zahl von 0 bis 100, bevorzugt eine ganze Zahl von 0 bis 10, bedeuten und
o eine ganze Zahl von 1 bis 35, bevorzugt eine ganze Zahl von 1 bis 12 ist.

Bei dem eingesetzten acryl- oder methacrylfuntionellen Cyclodextrin(derivat) handelt es sich bevorzugt um Acryloyl-Cyclodextrin, 2-(Acrylamido)ethyloxy-Cyclodextrin und 3-(Acrylamido)propyloxy-Cyclodextrin sowie um 2-Hydroxy-3-methacryloyl-oxypropyl-Cyclodextrin.

Bei dem Verfahren 5 wird acryl- oder methacrylfuntionelles Cyclodextrin(derivat) in Mengen von bevorzugt 0,1 bis 90 Gewichtsprozent, besonders bevorzugt 1 bis 50 Gewichtsprozent, insbesondere 1 bis 30 Gewichtsprozent, jeweils bezogen auf das Gesamtgeicht der eingesetzten Amino-, Mercapto-, Hydroxy-, Carboxy-, Anhydrid-, Glycosido-, Phenol-, Polyglycol-, Phosphonato- oder Silalactongruppen aufweisenden Organosiliciumverbindung, eingesetzt , wobei die molare Cyclodxtrinmenge maximal 95 mol-% der epoxyfunktionellen Gruppen in der eingesetzten Organosiliciumverbindung betragen darf.

Die eingesetzten acryl- oder methacrylfuntionellen Cyclodextrin(derivat)e sind handelsübliche Produkte bzw. nach in der Chemie gängigen Verfahren herstellbar.

Das Verfahren 5 kann mit oder ohne Katalyse erfolgen, wobei als Katalysator alle bekannten Verbindungen, die Michael-ähnliche Additionsreaktionen katalysieren, wie z.B. Brønsted-Säuren, wie Phosphorsäure, Schwefelsäure, Salzsäure, Eisessig, Propion- und Ameisensäure, oder deren wässrigen Lösungen, Lewis-Säuren, wie Litiumperchlorat, Zinktetrafluoroborat, Eisen(II)chlorid und Zinn(IV)chlorid, sowie Brensted-Basen, wie Benzyltrimethylammoniumhydroxid, Tetramethylammoniumhydroxid, Alkali- und Erdalkalihydroxid, Alkalialkoholate und Alkaliamide, eingesetzt werden können.

Bevorzugt wird das Verfahren 5 mit Katalyse durchgeführt, wobei dann der Katalysator in Mengen von vorzugsweise 0,001 bis 1 Mol, je Mol Doppelbindung des eingesetzten acryl- oder methacrylfuntionellen Cyclodextrin(derivat)s verwendet wird.

Ein weiteres Verfahren **(Verfahren 6)** zur Herstellung der Organosiliciumverbindungen, besteht darin, dass aminofunktionelles Cyclodextrin(derivat) mit Acryl- oder Methacrylgruppen aufweisender Organosiliciumverbindung umgesetzt wird.

Bei den eingesetzten Organosiliciumverbindungen kann es sich um beliebige Acryl- oder Methacrylgruppen aufweisende Organosiliciumverbindungen handeln.

Vorzugsweise handelt es sich bei den im Verfahren 6 eingesetzten Organosiliciumverbindungen um solche aus Einheiten der Formel

A⁶_{a⁶}R_{b}X_{c}H_{d}SiO_{(4-a⁶b-c-d)/2} (I⁶),

worin
R, X, b, c und d die oben dafür angegebene Bedeutung haben, A⁶ einen acryl- oder methacrylfunktionellen Rest bedeutet und a⁶ eine für a angegebene Bedeutung hat, mit der Maßgabe, dass die Summe a⁶+b+c+d ≤ 4 ist, und die Organosiliciumverbindung pro Molekül mindestens einen Rest A⁶ aufweist.

Beispiele für Rest A⁶ sind der 3-Acryloxy-propyl- und 3-Methacryloxypropylrest.

Bei den bevorzugten und besonders bevorzugten Spezies der eingesetzten Organosiliciumverbindungen aus Einheiten der Formel (I⁶) handelt es sich selbstverständlich um analoge Strukturen wie oben bereits im Zusammenhang mit den Organosiliciumverbindungen beschrieben.

Die eingesetzten acryl- oder methacrylfunktionellen Organosiliciumverbindungen sind handelsübliche Produkte bzw. nach in der Siliciumchemie gängigen Verfahren herstellbar.

Bei dem eingesetzten aminofunktionellen Cyclodextrin(derivat) kann es sich um ein beliebiges auch bisher bekanntes Cyclodextrin(derivat), das über eine oder mehrere, gleiche oder verschiedene mit Aminogruppen und deren Derivaten substituierte Kohlenwasserstoffreste, wie z.B. den β-Aminoethyl-, β-(N-Methyl)aminoethyl-, β-(N-Ethyl)aminoethyl-, γ-Aminopropyl-, γ-Amino-2-hydroxy-propyl-, γ-(N-Methyl)amino-2-hydroxy-propyl-, γ-(N-Ethyl)amino-2-hydroxy-propyl-, γ-(N-tert.-Butyl)amino-2-hydroxy-propyl-, γ-(N-Cyclohexyl)amino-2-hydroxypropyl-, 3-(γ-Amino-2-hydroxy-propyl-)propyl- und 3-{γ-(N-Ethyl)amino-2-hydroxy-propyl-}propylrest, verfügt, handeln.

Bevorzugt handelt es sich bei dem mit Aminogruppen und deren Derivate substituierten Kohlenwasserstoffrest um den β-Aminoethyl-, β- (N-Methyl)aminoethyl-, γ-Aminopropyl-, γ-(N-tert. Butyl)amino-2-hydroxy-propyl- und γ-(N-Cyclohexyl)amino-2-hydroxy-propylrest.

Bei dem Verfahren 6 wird aminofuntionelles Cyclodextrin(derivat) in Mengen von bevorzugt 0,1 bis 90 Gewichtsprozent, besonders bevorzugt 1 bis 50 Gewichtsprozent, insbesondere 1 bis 30 Gewichtsprozent, jeweils bezogen auf das Gesamtgewicht der eingesetzten acryl- oder methacrylfuntionellen Organosiliciumverbindung, eingesetzt, wobei die molare Cyclodxtrinmenge maximal 95 mol-% der epoxyfunktionellen Gruppen in der eingesetzten Organosiliciumverbindung betragen darf.

Die eingesetzten aminfuntionellen Cyclodextrin(derivat)e sind handelsübliche Produkte bzw. nach in der Chemie gängigen Verfahren herstellbar.

Das Verfahren 6 kann mit oder ohne Katalyse erfolgen, wobei als Katalysator alle bekannten Verbindungen, die Michael-ähnliche Additionsreaktionen katalysieren, wie z.B. Brønsted-Säuren, wie Phosphorsäure, Schwefelsäure, Salzsäure, Eisessig, Propion- und Ameisensäure, oder deren wässrigen Lösungen, Lewis-Säuren, wie Litiumperchlorat, Zinktetrafluoroborat, Eisen(II)chlorid und Zinn(IV)chlorid, sowie Brønsted-Basen, wie Benzyltrimethylammoniumhydroxid, Tetramethylammoniumhydroxid, Alkali- und Erdalkalihydroxid, Alkalialkoholate und Alkaliamide, eingesetzt werden.

Bevorzugt wird das Verfahren 6 mit Katalyse durchgeführt, wobei dann der Katalysator in Mengen von vorzugsweise 0,001 bis 1 Mol, je Mol Acryl- oder Methacrylgruppe der eingesetzten Organosiliciumverbindung verwendet wird.

Ein Vorteil von allen beschriebenen Verfahren besteht jeweils unabhängig voneinander darin, dass sie einfach in der Durchführung bei hoher Flexibilität sind und sowohl auf Silane, d.h. Verbindungen der Formel (I) mit a+b+c+d=4, als auch auf Polysiloxane, d.h. Verbindungen enthaltend Einheiten der Formel (I) mit a+b+c+d ≤ 3, anwendbar sind.

Des weiteren haben die Verfahren den Vorteil, dass durch Modifikation des Cyclodextringehaltes sowie der Polymerstrukturen und -kettenlängen bzw. der Silanstrukturen die Eigenschaften der Organosiliciumverbindungen, wie Substantivität, Hydrophilie, Hydrophobie, Selbstemulgierbarkeit etc., jeweils auf einfache Art und ganz gezielt eingestellt werden können.

Die Verfahren 1 bis 6 können jeweils unabhängig voneinander jeweils absatzweise, halbkontinuierlich oder vollkontinuierlich durchgeführt werden.

Bei den Verfahren 1 bis 6 erfolgen die Umsetzungen bevorzugt jeweils als 1-Phasen- oder 2-Phasen-Reaktion. Im folgenden sollen drei mögliche Varianten beschrieben werden, die gleichermaßen auf alle Verfahren Anwendung finden können:
- als 2-Phasen-Reaktion mit mechanischem Eintrag der zur Umsetzung benötigten Energie unter gleichzeitiger Homogenisierung der Reaktionsmischung mittels einer hohe Scherkräfte erzeugenden Vorrichtung **(Variante A)**,
- als 2-Phasen-Reaktion durch Umsetzung von Dispersionen **(Variante B)**, oder
- als 1-Phasen-Reaktion unter Verwendung eines gegenüber den Reaktanden inerten, aprotischen Lösungsmittels (Variante C).

### 2-Phasen-Reaktion mit mechanischem Energieeintrag (Variante A)

Dabei erfolgt die Umsetzung von Cyclodextrin-(derivat) mit Organosiliciumverbindung nach Variante A unter Verwendung von nicht mischbaren Lösungsmitteln für eine oder beide Reaktanden, so dass 2 Phasen entstehen, mittels geeigneter Durchmischungsmethoden je nach Verfahren mit oder ohne Katalysator.

Geeignete Lösungsmittel für das eingesetzte Cyclodextrin(derivat) sind solche, die gegenüber den reaktiven Gruppen des Cyclodextrin(derivat)s inert sind, wie organische aprotische Lösungsmittel, Wasser, wässrige Elektrolytlösungen, wässrige Laugen, wässrige Säuren oder organisch wässrige Mischungen aus den oben genannten aprotischen organischen Lösungsmitteln mit wässrigen Systemen. Bevorzugte organische aprotische Lösungsmittel sind Dimethylformamid und Dimethylsulfoxid. Bevorzugte wässrige Systeme sind wässrige Säuren und wässrige Laugen.

Bei dem Lösungsmittel, in dem das eingesetzte Cyclodextrin(derivat) gelöst wird, handelt es sich bevorzugt um wässrige Systeme, wobei wässrige Lösungen von 1 bis 50 Gew.-% besonders bevorzugt sind.

Geeignete Lösungsmittel für die eingesetzte Organosiliciumverbindung sind solche, die gegenüber den reaktiven Gruppen der Reaktanden inert sind, wie organische, aprotische Lösungsmittel, wie z.B. Toluol, Hexan, Cyclohexan oder dimere, oligomere oder polymere Siloxane, wie z.B. Hexamethyldisiloxan oder Octamethylcyclotetrasiloxan, die nicht mit dem Lösungsmittel oder Lösungsmittelgemisch des eingesetzten Cyclodextrin(derivat)s mischbar sind.

Im Rahmen der vorliegenden Erfindung soll unter dem Begriff der Nicht-Mischbarkeit von Lösungsmitteln eine Mischbarkeit bis max. 1 Gew.-% bei 25°C und einem Druck der umgebenden Atmosphäre verstanden werden.

Die Umsetzung gemäß Variante A wird bei einer Temperatur von bevorzugt 0 bis 200°C, besonders bevorzugt 50 bis 150°C, insbesondere 70 bis 130°C, und bevorzugt bei einem Druck der umgebenden Atmosphäre, also bei 900 bis 1100 hPa, durchgeführt. Die Reaktionszeiten liegen bevorzugt zwischen 5 Minuten und 2 Stunden, besonders bevorzugt zwischen 5 und 45 Minuten.

Nach der Umsetzung nach Variante A können alle bekannten, auch kontinuierliche, Durchmischungsmethoden angewandt werden, die die beiden, nicht mischbaren Phasen möglichst homogenisieren und somit eine große innere Reaktionsfläche schaffen. Geeignete Methoden zur Dispersion der Phasen sind dabei Rührwerke aller Art, bevorzugt Ultraschallsonden oder -bäder und Hochgeschwindigkeitsrührwerke, wobei Hochgeschwindigkeitsrührwerke, wie z.B. Ultra-Turrax (Janke & Kunnel, IKA Labortechnik Ultra-Turrax T 50, 1100W, 10,000 U/min) oder a-zentrische Dissolversysteme (Molteni, Labmax, 6 000 U/min), besonders bevorzugt sind.

Die Verfahren nach Variante A haben den Vorteil, dass die erhaltenen cyclodextrinhaltigen Organosiliciumverbindungen nicht mehr aufgearbeitet werden müssen. Des weiteren haben die Verfahren nach Variante A den Vorteil, dass sie ohne Lösungsvermittler, wie primärer Alkohol, und ohne oberflächenaktive Substanzen, wie Tenside, durchgeführt werden können.

### 2-Phasen-Reaktion durch Umsetzung von Dispersionen (Variante B)

Die Umsetzung der Ausgangsverbindungen zu den Organosiliciumverbindungen kann auch Dispersion, wie z. B. Micro- oder Macro-Emulsion, durchgeführt werden, wobei die eingesetzte Organosiliciumverbindung die dispergierte Phase in der wässrigen Flotte ist und durch bekannte Art und Weise, wie etwa durch geeignete Emulgatoren, stabilisiert wird.

Das eingesetzte Cyclodextrin(derivat) wird in einem geeigneten Lösungsmittel gelöst, bevorzugt in Wasser oder wässrigen, verdünnte Elektrolytlösungen, und zu der Dispersion gegeben oder umgekehrt. Die Umsetzung nach Variante B verläuft ebenfalls je nach Verfahren wahlweise mit oder ohne Katalysator.

Die Umsetzung gemäß Variante B wird bei einer Temperatur von bevorzugt 0 bis 100°C, besonders bevorzugt 10 bis 50°C, insbesondere 20 bis 35°C, und bevorzugt bei einem Druck der umgebenden Atmosphäre, also bei 900 bis 1100 hPa, durchgeführt. Die Reaktionszeiten liegen bevorzugt zwischen einer und 200 Stunden, wobei die Dispersion jeweils durchmischt werden kann.

Die die eingesetzte Organosiliciumverbindung enthaltende Dispersion kann nach beliebiger und bisher bekannter Art und Weise hergestellt werden. Dabei können beispielsweise alle Emulgatoren verwendet werden, die auch bisher zur Herstellung von Dispersionen verwendet worden sind, wie etwa nichtionische, anionische, kationische oder amphotere Emulgatoren. Die eingesetzten Dispersionen haben einen Anteil an Organosiliciumverbindungen von bevorzugt 1 bis 50 Gewichtsprozent.

Die Verfahren nach Variante B haben den Vorteil, dass die erhaltenen cyclodextrinhaltigen Organosiliciumverbindungen nach Beendigung der Umsetzung direkt in Form von Emulsionen anfallen und als solche direkt, je nach Verwendungszweck, appliziert werden können.

Falls jedoch nach Beendigung der Umsetzung eine Aufarbeitung der die Organosiliciumverbindungen enthaltenden Dispersion gewünscht ist, kann dies nach an sich bekannten Methoden erfolgen, wie z.B. durch Brechen der Dispersion mit konzentrierten Elektrolytlösungen oder durch Zugabe von wasserlöslichen, polaren Lösungsmitteln, wie Aceton. Vorzugsweise wird dann die Ölphase abgetrennt und anschließend aufgereinigt durch mehrmaliges Ausschütteln mit konzentrierten Elektrolytlösungen, wie z.B. mit 20 Gew.%-iger Natriumchloridlösung. Die so erhaltenen Organosiliciumverbindungen werden dann bevorzugt getrocknet.

### 1-Phasen-Reaktion (Variante C)

Die Umsetzungen der Ausgangsverbindungen zu den Organosiliciumverbindungen können auch homogen geführt werden. Dabei wird das eingesetzte Cyclodextrin(derivat) in einem gemeinsamen, gegenüber den Reaktanden inerten, aprotischen organischen Lösungsmittel oder wässrig-organischen Lösungsmittelgemischen, bevorzugt in Dimethylformamid, Dimethylsulfoxid oder Hexamethylphosphorsäuretriamid, besonders bevorzugt Dimethylsulfoxid, gelöst. Die Umsetzung nach Variante C verläuft ebenfalls je nach Verfahren wahlweise mit oder ohne Katalysator.

Die Umsetzung gemäß Variante C wird bei einer Temperatur von bevorzugt 0 bis 100°C, besonders bevorzugt 60 bis 80°C, und bevorzugt bei einem Druck der umgebenden Atmosphäre, also bei 900 bis 1100 hPa, durchgeführt. Die Reaktionszeiten liegen bevorzugt zwischen 15 Minuten und 5 Stunden.

Die Organosiliciumverbindungen können dann z.B. durch einfaches Abdestillieren des Lösungsmittels oder des Lösungsmittelgemisches isoliert werden.

Die Umsetzung gemäß Variante C hat den Vorteil, dass sie auf einfache Art und Weise mit einfachen Apperaturen durchgeführt werden kann und die Organosiliciumverbindungen in Reinform erhalten werden.

Alle der nach den Varianten A, B oder C durchgeführten, Verfahren haben den Vorteil, dass sie sehr einfach in der Durchführung sind, und und die Organosiliciumverbindungen reproduzierbar und mit sehr hoher Ausbeute, vorzugsweise 90 bis 99%, hergestellt werden können.

Die Organosiliciumverbindungen werden bevorzugt nach Variante A oder B, jeweils gegebenenfalls in Kombination mit einem Equilibrierungsschritt, durchgeführt.

Falls erwünscht, können die nach den Verfahren erhaltenen, cyclodextrinreste aufweisenden Organosiliciumverbindungen mit Organopolysiloxanen, bevorzugt ausgewählt aus der Gruppe bestehend aus linearen, endständige Triorganosiloxygruppen aufweisenden Organopolysiloxanen, linearen, endständige Hydroxylgruppen aufweisende Organopolysiloxanen, cyclischen Organopolysiloxanen und Mischpolymerisaten aus Diorganosiloxan- und Monoorganosiloxaneinheiten, equilibriert werden, wodurch beispielsweise die Einstellung des gewünschten Molekulargewichts sowie die gezielte Verteilung der Cyclodextringruppen im Molekül und gegebenenfalls die Einführung weiterer Funktionalitäten ermöglicht wird.

Vorzugsweise werden als lineare, endständige Triorganosiloxygruppen aufweisenden Organopolysiloxane solche der Formel

R⁵₃SiO(SiR⁵₂O)ₚSiR⁵₃ (IV),

als lineare, endständige Hydroxylgruppen aufweisende Organopolysiloxane solche der Formel

HO(SiR⁵₂O)_{q}H (V),

als cyclischen Organopolysiloxane solche der Formel

(SiR⁵₂O)ᵣH (VI),

und als Mischpolymerisate solche aus Einheiten der Formel R⁵₃SiO_{1/2}, R⁵₂SiO und R⁵SiO_{3/2}
eingesetzt, wobei
R⁵ jeweils gleich oder verschieden sein kann und eine für R angegebene Bedeutung hat,
p 0 oder eine ganze Zahl von 1 bis 1500 ist,
q 0 oder eine ganze Zahl von 1 bis 1500 ist und
r eine ganze Zahl von 3 bis 12 ist.

Die Mengenverhältnisse der bei der gegebenenfalls durchgeführten Equilibrierung eingesetzten Organopolysiloxane und hergestellten Organosiliciumverbindungen werden lediglich durch den gewünschten Anteil der Cyclodextringruppen in den bei der gegebenenfalls durchgeführten Equilibrierung erzeugten Organosiliciumverbindung und durch die gewünschte mittlere Kettenlänge bestimmt.

Bei der gegebenenfalls durchgeführten Equilibrierung werden vorzugsweise basische Katalysatoren, welche die Equilibrierung fördern, eingesetzt.

Beispiel für solche Katalysatoren sind Benzyltrimethylammoniumhydroxid, Tetramethylammoniumhydroxid, Alkalihydroxid und Erdalkalihydroxid in methanolischer Lösung, z.B. solche mit einem Gehalt zwischen 5 und 20 Gew.% NaOH oder KOH), sowie Silanolate. Bevorzugt sind hierbei Alkalihydroxide, welche in Mengen von vorzugsweise 50 bis 10000 Gew.-ppm (Teile je Million), insbesondere 500 bis 2000 Gew.-ppm, jeweils bezogen auf das Gesamtgewicht der eingesetzten Organosiliciumverbindungen, verwendet wird. Vor dem Aufarbeiten des bei dem Equilibrieren erhaltenen Gemisches kann der Katalysator unwirksam gemacht werden.

Die gegebenenfalls durchgeführte Equilibrierung wird vorzugsweise bei einer Temperatur von bevorzugt 50 bis 150°C, besonders bevorzugt 70 bis 120°C, und bevorzugt bei einem Druck der umgebenden Atmosphäre, also bei 900 bis 1100 hPa, durchgeführt.

Die Equilibrierung kann aber auch bei höheren oder niedrigeren Drücken durchgeführt werden.

Das Equilibrieren kann, falls erwünscht, in mit Wasser nicht mischbarem Lösungsmittel, wie Toluol, durchgeführt werden, was jdoch nicht bevorzugt ist. Falls solche organischen Lösungsmittel jedoch eingesetzt werden, sind Mengen von 5 bis 20 Gew.-%, bezogen auf das Gesamtgewicht der eingesetzten Organosiliciumverbindungen, bevorzugt.

Die Organosiliciumverbindungen haben desweiteren den Vorteil, dass sie stabil sind, d.h. bei Raumtemperatur und unter Druck der umgebenden Atmosphäre für mindestens 1 Jahr lagerstabil sind.

Ein weiterer Vorteil der vorliegenden Erfindung besteht darin, dass die Organosiliciumverbindungen in Substanz, in Lösung oder in Form von Emulsionen und Dispersionen verwendet werden können.

Die Organosiliciumverbindungen können für viele Zwecke eingesetzt werden, für die auch bisher Cyclodextrin(derivate) bzw. Organosiliciumverbindungen eingesetzt worden sind. Der Vorteil besteht darin, dass die Organosiliciumverbindungen die Eigenschaften der Cyclodextrine mit denen der Organosiliciumverbindungen, wie Silicone, vereinen. Die Organosiliciumverbindungen können daher überall dort eingesetzt werden, wo zugleich die Eigenschaften von Siliconen, wie z.B. Hydrophobierung, Schmutzabweisung, Schutz, Weichgriff usw., kombiniert mit denen von Cyclodextrinen, wie z.B. Hydrophilie, sog. Host-Guest-Effekten usw., gefordert sind.

Die Organosiliciumverbindungen können als Wirkstoffträger, als Absorbens von Gerüchen oder Geruchststoffen, als Textilhilfsmittel, als Phasenvermittler, als Anti-Schaummittel, als Zusatz zu Kosmetika oder Shampoos, in der Lackpflege, wie z B. für Autolacke, zur Modifizierung harter Oberflächen und als Bestandteil oder Additiv in selbst-härtenden Füll- und Dichtmaterialien verwendet werden.

Besonders geeignet sind die Organosiliciumverbindungen zur Ausrüstung von organischen Fasern, bevorzugt textilen Materialien, und Leder.

Ein Verfahren zur Behandlung von organischen Fasern, besteht darin dass Organosiliciumverbindungen auf die zu behandelnden Fasern bzw. textilen Flächengebilden aufgebracht werden.

Dies kann z.B. durch Sprühen, vorzugsweise aber durch Foulardapplikation aus wässrigen Systemen erfolgen. Dazu wird eine Emulsion der Cyclodextrinreste aufweisenden Organosiliciumverbindung auf ein textiles Flächengebilde, wie Gewebe, Gewirke oder sog. Nonwovens, oder auf ein Faserkabel aufgebracht. Im Sprühprozess kann dies mittels eines Sprühkopfes, Sprühbalkens oder einer Tellersprühvorrichtung, wie z.B. der in der Textilindustrie bekannten Weko-Maschine, geschehen.

Bei der sog. Foulardapplikation wird das textile Substrat durch ein Tauchbad geführt und anschließend mittels eines Walzenpaares auf eine definierte Flottenaufnahme abgequetscht. Durch die Konzentration der Behandlungsflotte und die Flottenaufnahme kann die Beladung des textilen Substrates mit der Cyclodextrinreste aufweisenden Organosiliciumverbindung gesteuert werden.

Sollte die Einführung von Cyclodextringruppen aufweisenden Organosiliciumverbindungen an das Textil den Zweck haben, Duftstoffe permanent zu applizieren, so kann die Beladung des Cyclodextrins mit dem Duftstoff, wie in den nachfolgenden Ausführungsbeispielen erläutert, im Zuge des Verfahrens zur Herstellung der Cyclodextringruppen aufweisenden Organosiliciumverbindungen durchgeführt werden. Die ausgerüsteten Stoffe aus cellulosischem Subtrat zeigen vorteilhafterweise angenehmen textilen Warengriff und sind in der Lage Parfüms und Duftstoffe über längere Zeit zu speichern und diese erst nach Einwirkung von Körperwärme und Feuchtigkeit langsam und gezielt abzugeben. Bei Applikation unbeladener Cyclodextrine bzw. nach Freisetzung der Duftstoffe sind derartig ausgerüstete Stoffe in der Lage, Gerüche zu absorbieren und somit einen Frischeeffekt zu bewirken. Statt Duftstoffen können natürlich auch andere Wirkstoffe, wie beispielsweise insektizide, herbizide, medizinisch oder biologisch wirksame Agenzien, in bekannter Weise als Gastmoleküle in die Cyclodextrine eingelagert werden.

Das Verfahren zur Behandlung von organischen Fasern hat den Vorteil, dass die durch die Organosiliciumverbindungen behandelten organischen Fasern einen angenehmen Weichgriff haben.

Die Organosiliciumverbindungen haben des weiteren den Vorteil, dass sie direkt in wässrigem Medium, z.B. aus Emulsion, appliziert werden können.

Das Verfahren zur Behandlung von organischen Fasern hat den Vorteil, dass die Cyclodextrinreste aufweisende Organosiliciumverbindungen im Zuge der Textilausrüstung nach Verfahrensvariante B direkt aus den Edukten, die in situ miteinender reagieren, durchgeführt werden kann.

Ein weiterer Gegenstand der vorliegenden Erfindung sind vernetzbare Massen auf der Basis von Organosiliciumverbindungen enthaltend
(A) Organopolysiloxane mit mindestens zwei hydrolysierbaren bzw. kondensationsfähigen Resten, ausgewählt aus Organyloxygruppen sowie Hydroxyresten,
(B) Cyclodextrinreste aufweisende Organosiliciumverbindung mit mindestens zwei hydrolysierbaren bzw. kondensationsfähigen Resten, ausgewählt aus Organyloxygruppen sowie Hydroxyresten, und/oder deren Teilhydrolysaten bzw. deren Teilkondensaten, gegebenenfalls
(C) Vernetzer, ausgewählt aus mindestens zwei Si-gebundene Wasserstoffatome aufweisenden Organopolysiloxanen und Aminogruppen aufweisenden Organosiliciumverbindungen mit mindestens zwei hydrolysierbaren bzw. kondensationsfähigen Resten, ausgewählt aus Organyloxygruppen sowie Hydroxyresten, und gegebenenfalls
(D) Kondensationskatalysator.

Bei der in den erfindungsgemäßen Massen eingesetzten Komponente (A) kann es sich um beliebige Organopolysiloxane handeln, die auch bisher in durch Kondensationsreaktion vernetzbaren Massen eingesetzt wurden.

Bei den erfindungsgemäß eingesetzten Organopolysiloxanen (A) handelt es sich vorzugsweise um solche der allgemeinen Formel

(R³ 'O)_{3-e '}R^{4 '}_{e '}SiO-[R^{4 '}₂SiO]_{f '}-SiR^{4 '}_{e '}(OR^{3 '})_{3-e '} (I'),

wobei
e ' 0, 1 oder 2 ist,
R^{4 '} gleiche oder verschiedene SiC-gebundene Kohlenwasserstoffreste, die gegebenenfalls mit Halogenatomen, Aminogruppen, Ethergruppen, Estergruppen, Epoxygruppen, Cyanogruppen oder (Poly)glykolresten substituiert sind, wobei letztere aus Oxyethylen- und/oder Oxypropyleneinheiten aufgebaut sind, bedeutet und
R^{3'} gleich oder verschieden sein kann Wasserstoffatom oder eine für R^{4 '} angegebene Bedeutung hat,
f ' eine ganze Zahl von 10 bis 100000, bevorzugt 20 bis 20000, besonders bevorzugt 30 bis 2000, ist, mit der Maßgabe, dass e' nur bei R^{3 '} gleich Wasserstoffatom den Wert 2 haben kann.

Beispiele für Rest R^{4 '} sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der der α- und der β-Phenylethylrest.

Beispiele für substituierte Reste R^{4 '} sind Halogenalkylreste, wie der 3,3,3-Trifluor-n-propylrest, der 2,2,2,2',2',2'-Hexafluor-isopropylrest, der Heptafluorisopropylrest und Halogenarylreste, wie der o-, m- und p-Chlorphenylrest, Aminopropylrest, Aminoethylaminopropylrest, Cyclohexylaminopropylrest, N-Alkyl- und N,N-Dialkylaminopropylrest.

Bevorzugt handelt es sich bei Rest R^{4 '} um gegebenenfalls mit Aminogruppen substituierte Kohlenwasserstoffreste mit 1 bis 18 Kohlenstoffatomen, besonders bevorzugt um unsubstituierte Kohlenwasserstoffreste mit 1 bis 4 Kohlenstoffatomen, insbesondere um den Methyl-, oder Ethylrest.

Beispiele für Reste R^{3 '}sind die für Rest R^{4 '} angegebenen Beispiele.

Bevorzugt ist der Rest R^{3 '} ein Wasserstoffatom oder ein Alkylrest mit 1 zu 8 Kohlenstoffatomen, besonders bevorzugt um Wasserstoffatom, Methyl- oder Ethylrest.

Der durchschnittliche Wert für die Zahl f ' in Formel (I ') ist vorzugsweise so gewählt, dass das Organopolysiloxan der Formel (I ') eine Viskosität von 100 bis 100000 mm²/s, besonders bevorzugt von 2000 bis 50000 mm²/s, jeweils gemessen bei einer Temperatur von 25°C, besitzt.

Obwohl in Formel (I ') nicht angegeben, können bis zu 10 Molprozent der Diorganosiloxaneinheiten durch andere Siloxaneinheiten, wie R^{4 '}₃SiO_{1/2}-, R^{4 '}SiO_{3/2}- und SiO_{4/2}-Einheiten, ersetzt sein, wobei R^{4 '} die vorstehend dafür angegebene Bedeutung hat.

Beispiele für die in den erfindungsgemäßen Massen eingesetzten Diorganopolysiloxane mit mindestens zwei Organyloxyresten bzw. Hydroxyresten an einer jeden Endgruppe (A) sind

(MeO) Me₂SiO [SiMe₂O]₅₀₋₂₀₀₀SiMe₂(OMe),

(EtO)₂MeSiO[SiMe₂O]₅₀₋₂₀₀₀SiMe (OEt)₂,

(HO)Me₂SiO[SiMe₂O]₅₀₋₂₀₀₀SiMe₂(OH),

(MeO)₂MeSiO[SiMe₂O]₅₀₋₂₀₀₀[SiMeAmO]₁₋₂₀SiMe (OMe)₂,

(EtO)Me₂SiO[SiMe₂O]₅₀₋₂₀₀₀[SiMeAmO]₁₋₂₀SiMe₂ (OEt) und

(HO) Me₂SiO[SiMe₂O]₅₀₋₂₀₀₀[SiMeAmO]₁₋₂₀SiMe₂ (OH),

wobei Me Methylrest und Am Aminopropyl-, Aminoethylaminopropyl- oder Cyclohexylaminorest bedeutet.

Die in den erfindungsgemäßen Massen eingesetzten Organopolysiloxane (A) sind handelsübliche Produkte bzw. können nach in der Siliciumchemie bekannten Verfahren, beispielsweise durch Umsetzung von α,ω-Dihydroxypolyorganosiloxanen mit den entsprechenden Organyloxysilanen, hergestellt werden.

Vorzugsweise wird Komponente (A) in Form einer wässrigen Emulsion eingesetzt. Dabei kann es sich um übliche Emulsionen handeln, die nach bekannten Verfahren unter Zuhilfenahme geeigneter Emulgatoren hergestellt werden können. Geeignete Emulgatoren sind beispielsweise Alkylphenolethoxylate oder Fettalkoholethoxylate. Falls Komponente (A) in Form einer Emulsion eingesetzt wird kann deren Feststoffgehalt nahezu beliebig sein, üblicherweise liegt der Feststoffgehalt von solchen Emulsionen zwischen 15 und 55 Gewichtsprozent.

Die Komponente (A) kann auch durch Emulsionspolymerisation aus oligomeren Vorstufen z.B. mittels Katalyse durch Alkylbenzolsulfonsäure direkt in Emulsion hergestellt werden.

Bei den in den erfindungsgemäßen Massen eingesetzten Organosiliciumverbindungen (B) handelt es sich bevorzugt um solche enthaltend Einheiten der Formel

A '_{a '}R '_{b '}X '_{c '}SiO_{(4-a '-b '-c ')/2} (II '),

wobei
A ' gleich oder verschieden sein kann und einen Rest der Formel

CD '-R^{2 '}- (III ')

bedeutet, wobei
CD ' einwertiger, gegebenenfalls derivatisierter Cyclodextrinrest bedeutet und R^{2 '} ein zweiwertiger, gegebenenfalls substituierter Kohlenwasserstoffrest bedeutet, der mit Sauerstoff, Mercapto-, Amin-, Carbonyl-, Carboxyl-, Sulfoxid- oder Sulfonylgruppen unterbrochen sein kann,
R'' ' gleich oder verschieden sein kann und einen gegebenenfalls substituierten Kohlenwasserstoffrest, der durch Sauerstoffatome und/oder Stickstoffatome unterbrochen sein kann, bedeutet,
X ' gleich oder verschieden sein kann und einen Rest der Formel -OR^{1 '} mit R^{1 '} gleich Wasserstoffatom oder gegebenenfalls substituierten Kohlenwasserstoffrest, der durch Ethersauerstoffatome substituiert sein kann, bedeutet,
a ' 0, 1 oder 2, bevorzugt 0 oder 1, ist
b ' 0, 1, 2 oder 3 ist und
c ' 0, 1, 2 oder 3 ist,
mit der Maßgabe, dass die Summe a '+b '+c ' ≤ 4 ist, die Organosiliciumverbindung pro Molekül mindestens einen Rest A' und mindestens zwei Reste X ' aufweist.

Bei den Organosiliciumverbindungen (B) kann es sich sowohl um Silane handeln, d.h. Verbindungen der Formel (II ') mit a'+b'+c'=4, als auch um Siloxane, d.h. Verbindungen enthaltend Einheiten der Formel (II ') mit a '+b '+c '≤3. Vorzugsweise handelt es sich bei den erfindungsgemäß eingesetzten Organosiliciumverbindungen um Silane. Falls es sich bei Komponente (B) um Siloxane handelt, sind es insbesondere solche, die aus Einheiten der Formel (II ') bestehen.

Beispiele für Rest R' sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest ; Decylreste, wie der n-Decylrest; Dodecylreste, wie der n-Dodecylrest; Octadecylreste, wie der n-Octadecylrest ; Cycloalkylreste, wie der Cyclopentyl-, Cyclohexyl-,-Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der der α- und der β-Phenylethylrest.

Beispiele für substituierte Reste R ' sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest, Aminopropyl-, Aminoethylaminopropyl-, Cyclohexylaminopropyl-, Dimethylaminopropyl- und Diethylaminopropylrest.

Bevorzugt handelt es sich bei Rest R ' um gegebenenfalls mit Amingruppen substituierte Kohlenwasserstoffreste mit 1 bis 18 Kohlenstoffatomen, besonders bevorzugt um gegebenenfalls mit Amingruppen substituierte Kohlenwasserstoffreste mit 1 bis 6 Kohlenstoffatomen, insbesondere um den Methylrest, den Aminopropyl- und den Aminoethylaminopropylrest.

Falls es sich bei Komponente (B) um Siloxane handelt, haben bevorzugt mindestens 50%, besonders bevorzugt mindestens 90%, aller Reste R''' ' die Bedeutung von Methylrest.

Beispiele für Reste R^{1 '} sind die für Rest R ' angegebenen Beispiele.

Bevorzugt ist der Rest R^{1 '} ein Wasserstoffatom oder ein Alkylrest mit 1 bis 8 Kohlenstoffatomen, besonders bevorzugt um Wasserstoffatom, Methyl- oder Ethylrest.

Bevorzugt handelt es sich bei X ' um Hydroxylrest, Methoxy- und Ethoxyrest.

Bei den Resten CD' ' kann es sich um beliebige und bisher bekannte Cyclodextrine bzw. Cyclodexrinderivate handeln, bei denen ein an Sauerstoff gebundenes Wasserstoffatom durch eine chemische Bindung ersetzt ist. Vorzugeweise handelt es sich bei den Resten CD um solche der allgemeine Formel 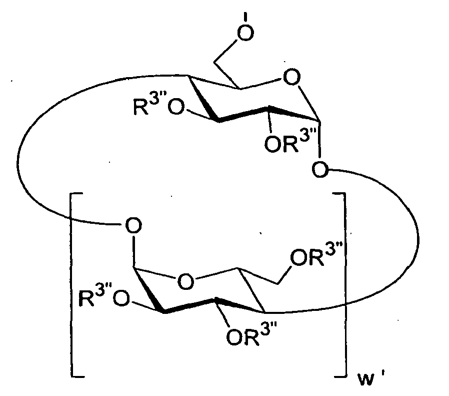 wobei R^{3 ' '} gleich oder verschieden sein kann und Wasserstoffatom, einen einwertigen Rest mit einer für R' angegebenen Bedeutung oder einen zweiwertigen Rest mit einer für R^{2 '} angegebenen Bedeutung darstellt, und w' gleich 5, 6 oder 7 ist.

Bevorzugt handelt es sich bei Rest R^{3 ' '} um Wasserstoffatom, einen gegebenenfalls mit Amin-, Carbonyl-, Carboxyl- oder Oxiranyl-gruppen substituierten ein- oder mehrwertigen Kohlenwasserstoffrest, einen Polyetherrest, der gegebenenfalls mit Hydroxy-, Mercapto-, Amin-, Ammonium-, Carbonyl-, Carboxyl-, Oxiranyl- oder reaktiven Sulfonsäurederivat-Gruppen substituiert sein kann, oder einen halogentriazinfunktionellen Rest. Besonders bevorzugt sind Wasserstoffatom, einwertiger Alkylrest, Acetylrest, Amino-, Epoxy-, Vinylsulfonyl-, 2-Sulfooxyethyl-sulfonyl-, 2-Chlorethyl-sulfonyl- und (Meth)acryloyl-funktioneller Alkyl- oder Polyetherrest sowie halogentriazinfunktioneller rest, wobei insbesondere Wasserstoffatom, der Methyl-, Ethyl- oder Propylrest, der Acetylrest, der β-Aminoethyl-, β- (N-Methyl)aminoethyl-, γ-Aminopropyl-, γ-(N-tert.-Butyl)amino-2-hydroxy-propyl- und γ-(N-Cyclohexyl)amino-2-hydroxy-propyl-rest, der Glycidoxypropylrest, der 3-(Vinylsulfonyl)-propyl-, Vinylsulfonyl-, (2-Sulfooxyethyl)sulfonyl-, (2-Chloroethyl)sulfonyl, *p*-Vinylsulfonyl-phenyl-, p-(2-Sulfooxyethyl)sulfonyl-phenyl- und ω-Vinyl-sulfonoyl-polyoxypropyl-rest, der Acryloyl-, 2-(N-Acrylamido)ethyl-, 3-(N-Acrylamido)propyl- und 2-Hydroxy-3-methacryloyl-oxypropyl-rest sowie der 4-Chlor-6-ONa-Triazinylrest bevorzugt ist.

Beispiele für Rest R² sind die oben für Rest R² oben angegebenen Beispiele. Bevorzugt handelt es sich bei Rest R^{2 '} um -C₃H₆-O-CH₂-CHOH-CH₂-, -C₃H₆-NH-CH₂CHOH-CH₂-O-C₃H₆-, -C₃H₆NHC₂H₉NHCH₂CHOHCH₂OC₃H₆-, gegebenenfalls substituierte Triazinylenreste, wie z.B. mit Iminopropyl- bzw. Iminoethylaminopropylrest substituierte Triazinylenreste und 2-ONa-Triazinyl-1,4-enrest, wobei Iminoethylaminopropylrest substituierte Triazinylenreste besonders bevorzugt sind.

Die erfindungsgemäß eingesetzten Organosiliciumverbindungen (B) besitzen vorzugsweise ein mittleres Molekulargewicht M_{w} von mindestens 1000 g/mol, besonders bevorzugt 2000 bis 50000 g/mol.

Die erfindungsgemäß eingesetzte Komponente (B) ist bei Raumtemperatur, also bei 20°C, bevorzugt flüssig.

Die erfindungsgemäß eingesetzte Komponente (B) weist im Fall von Siloxanen bei 20°C eine Viskosität von vorzugsweise 100 bis 10000 mm²/s, besonders bevorzugt 200 bis 4000 mm²/s, auf.

Falls es sich bei der erfindungsgemäß eingesetzten Komponente (B) um Organosiloxane handelt, sind lineare bevorzugt.

Beispiele für die erfindungsgemäß eingesetzte Komponente (B) sind die in den Ausführungsbeispielen beschriebenen Spezies, mit der Abänderung, dass diese anstelle der Trimethylsiloxyendgruppen solche Endgruppen aufweisen, wodurch die Verbindung jeweils mindestens zwei hydrolysierbare bzw. kondensationsfähige Gruppen besitzt.

Die erfindungsgemäß eingesetzte Komponente (B) kann nach beliebigen Verfahren hergestellt werden, wie z.B. oben beschrieben.

Falls es sich bei Komponente (B) um Silane handelt, so werden diese bevorzugt in Form einer wässrigen Lösung eingesetzt.

Falls es sich bei Komponente (B) um Siloxane handelt, so werden diese bevorzugt in Form einer Emulsion eingesetzt. Dabei kann es sich um übliche Emulsionen handeln, die nach bekannten Verfahren unter Zuhilfenahme geeigneter Emulgatoren hergestellt werden können. Geeignete Emulgatoren sind beispielsweise Alkylphenolethoxylate oder Fettalkoholethoxylate. Falls Komponente B in Form einer Emulsion eingesetzt wird kann deren Feststoffgehalt nahezu beliebig sein, üblicherweise liegt der Feststoffgehalt von solchen Emulsionen zwischen 15 und 55 Gewichtsprozent.

Die erfindungsgemäßen Massen enthalten Komponente (B) in Mengen von vorzugsweise 2 bis 60 Gewichtsteilen, besonders bevorzugt 20 bis 50 Gewichtsteilen, jeweils bezogen auf 100 Gewichtsteile Organopolysiloxan (A).

Bei den in den erfindungsgemäßen Massen gegebenenfalls eingesetzten Katalysatoren (D) kann es sich um beliebige Verbindungen handeln, die auch bisher in durch Kondensation vernetzbaren Massen als Katalysatoren eingesetzt worden sind.

Beispiele für gegebenenfalls eingesetzte Katalysatoren (D) sind Metallverbindungen, wie Butyltitanate und organische Zinnverbindungen, wie z.B. Di-octyl-zinndiacetat, sowie Carbonsäuren.

Falls die erfindungsgemäßen Massen Kondensationskatalysatoren (D) enthalten, handelt es sich um Mengen von vorzugsweise 0,01 bis 10,0 Gewichtsteilen, besonders bevorzugt 0,1 bis 10,0 Gewichtsteilen, insbesondere 0,5 bis 5,0 Gewichtsteilen, jeweils bezogen auf 100 Gewichtsteile Organopolysiloxan (A).

Zusätzlich zu den oben beschriebenen Komponenten (A), (B) und gegebenenfalls (D) können die erfindungsgemäßen Massen nun weitere Stoffe, wie Vernetzer (C) enthalten, was bevorzugt ist.

Als solche Vernetzer können in bekannter Weise Dialkoxyaminosilane, Trialkoxyaminosilane und deren Teilhydrolysate, Emulsionen von Organopolysiloxan mit Si-gebundenem Wasserstoff bzw. dessen Equilibrate dienen.

Falls die erfindungsgemäßen Massen Vernetzer (C) enthalten, handelt es sich um Mengen von vorzugsweise 0,1 bis 10 Gewichtsteilen, bezogen auf 100 Gewichtsteile Organopolysiloxan (A).

Bevorzugt handelt es sich bei den erfindungsgemäßen Massen um solche, die
(A) Organopolysiloxan der Formel (I '),
(B) Cyclodextrinreste aufweisende Organosiliciumverbindung enthaltend Einheiten der Formel (II'),
(C) Vernetzer sowie
   gegebenenfalls
(D) Katalysator
enthalten.

Besonders bevorzugt handelt es sich bei den erfindungsgemäßen Massen um solche, die aus
(A) 100 Gewichtsteilen Organopolysiloxan der Formel (I '),
(B) 20 bis 60 Gewichtsteilen Cyclodextrinreste aufweisende Organosiliciumverbindung enthaltend Einheiten der Formel (II ') und
(C) 1 bis 10 Teilen Vernetzer, ausgewählt aus Di- und Trialkoxyaminosilan bzw. dessen Teilhydrolysate,
bestehen.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Zur Bereitung der erfindungsgemäßen Massen können alle Bestandteile der jeweiligen Masse in Substanz bzw. in Emulsionsform, bevorzugt in Emulsionsform, in beliebiger Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35 bis 90°C.

Die erfindungsgemäßen vernetzbaren Massen haben den Vorteil, dass sie auf einfache Art und Weise herstellbar sind.

Die erfindungsgemäßen vernetzbaren Massen haben den Vorteil, dass sie leicht handhabbar und insbesondere in Emulsionsform bei Raumtemperatur lagerstabil sind.

Die Vernetzung der erfindungsgemäßen Massen kann auf an sich bekannte Weise durch thermische Aktivierung durchgeführt werden.

Bevorzugt wird die Vernetzung der erfindungsgemäßen Massen bei Temparturen von 100 bis 200°C, besonders bevorzugt 120 bis 190°C, insbesondere von 140 bis 160°C, durchgeführt werden. Vorzugsweise wird die Vernetzung bei einem Druck von 100 bis 1100 hPa, insbesondere beim Druck der umgebenden Atmosphäre, durchgeführt.

Handelt es sich bei den erfindungsgemäßen Massen um Emulsionen bzw. wässrige Lösungen, schließt der Vernetzumngsvorgang den Trocknungsvorgang mit ein. Wie in der Industrie üblich erfolgt die Trocknung/ Kondensation meist online nach der Applikation.

Die erfindungsgemäßen Massen können für alle Verwendungszwecke eingesetzt werden, für die zu Elastomeren vernetzende Organopolysiloxanmassen eingesetzt werden können.

Die erfindungsgemäßen Massen eignen sich insbesondere zur Ausrüstung von organischen Fasern, bevorzugt textilen Materialien, und Leder, besonders bevorzugt zur Ausrüstung von Vliesen und Füllfasern aus Materialien, wie z.B. Polyethylenterephtalat, Polypropylen oder Cellulosefaser.

Ein weiterer Gegenstand der vorliegenden Erfindung ist ein Verfahren zur Behandlung von organischen Fasern, dadurch gekennzeichnet, dass erfindungsgemäße Massen auf die zu behandelnden Fasern aufgebracht und vernetzen gelassen werden.

Bevorzugt wird dabei die erfindungsgemäße vernetzbare Masse in Emulsionsform bzw. wässriger Lösung auf die zu behandelnden Fasern aufgebracht und nach Entfernen des Wassers vernetzen gelassen.

Bei dem erfindungsgemäßen Verfahren werden die zu behandelnden organischen Fasern, insbesondere Füllfasern, vorzugsweise noch in Form der Filamente durch Besprühen oder Tauchen mit wässrigen Behandlungsflotten, die erfindungsgemäße Massen enthalten, benetzt. Dabei lässt sich durch die Konzentration der Komponenten in der Behandlungsflotte sowie durch die Flottenaufnahme die Siliconkonzentration auf der Faser steuern. Die Behandlung kann vor, im oder nach dem sog. Crimper erfolgen, einer mechanischen Vorrichtung, die das Filament kräuselt oder ihm Zickzack Form verleiht. In einem nachgeschalteten Trockner wird dann getrocknet und vernetzen gelassen. Üblicherweise handelt es sich um Zeitspannen von 10 bis 30 Minuten bei Temperaturen zwischen 110 und 190°C. Vorzugsweise wird dann zur Herstellung der Füllfaser das Filament durch Schneiden in eine Stapelfaser verwandelt.

Sollte die erfindungsgemäße Einführung von Cyclodextringruppen aufweisenden Organosiliciumverbindungen an das Textil den Zweck haben, Duftstoffe semipermanent zu applizieren, so kann die Beladung des Cyclodextrins mit dem Duftstoff im Zuge der Herstellung der erfindungsgemäßen Massen bereits im wässrigen Medium durchgeführt werden. Die erfindungsgemäß ausgerüsteten Vliese oder Füllfasern zeigen vorteilhafterweise angenehmen Weichgriff und Rücksprung und sind in der Lage Parfüms und Duftstoffe über längere Zeit zu speichern und diese erst nach Einwirkung von Körperwärme und Feuchtigkeit langsam und gezielt abzugeben. Bei Applikation unbeladener Cyclodextrine bzw. nach Abgabe der Duftstoffe sind derartig ausgerüstete Fasermaterialien, Vliese oder Gewebe/Gewirke (Stoffe) in der Lage, Gerüche zu absorbieren und somit einen Frischeeffekt zu bewirken. Statt Duftstoffen können natürlich auch andere Wirkstoffe, wie beispielweise pflegende oder insektenabweisende Agenzien, in bekannter Weise als Gastmoleküle in die Cyclodextrine eingelagert werden.

Die erfindungsgemäßen Massen haben den Vorteil, dass sie sich erst gezielt auf den auszurüstenden Fasersubstraten bilden.

Die mit den erfindungsgemäßen Massen behandelten Substrate haben den Vorteil, dass sie einen sympathischen, hautfreundlichen Weichgriff besitzen.

Die mit den erfindungsgemäßen Massen behandelten Substrate haben des weiteren den Vorteil, dass sowohl die mit Cyclodextrinen bekannterweise erzielbaren Effekte wie auch eine weichmachender und rücksprungfördernder Siliconeffekt erzielt werden können.

Das erfindungsgemäße Verfahren zur Behandlung von organischen Fasern hat den Vorteil, dass Cyclodextrine in einfacher Weise waschbeständig auch auf nichtreaktive Fasern, wie Polyester oder Polypropylen, fixiert werden können.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Unter Aminzahl soll im folgenden die Zahl verstanden werden, die der Anzahl von ml 1N HCl entspricht, die zur Neutralisation von 1 g Substanz erforderlich ist.

### Beispiel 1

100 g eines aminoalkylfunktionalisierten, mit Trimethylsilylgruppen terminierten Siliconöls der unten näher bezeichneten Art werden in einem Becherglas vorgelegt. Mit einem Ultra-Turrax (Janke & Kunnel, IKA Labortechnik Ultra-Turrax T 50, 1100W, 10 000 U/min) dispergiert man die in Tabelle 1 angegebene Menge Cyclodextrin, jeweils gelöst in der 1,2-fachen Menge Wasser, ein und arbeitet die Reaktionsmischung 90 bis 120 Minuten gut durch. Dabei steigt die Temperatur je nach Viskosität des eingesetzten Siliconöls auf etwa 50 bis 80°C. Nach dem Abdestillieren des verbliebenen Restwassers werden cyclodextrinhaltige Siliconöle erhalten, die keinerlei Ausflockung oder Ausfällung des Cyclodextrins über Monate hinweg zeigen.

**Tabelle 1**

| Beispiel | eingesetztes Siliconöl | Aminzahl des eingesetzten Siliconöls (mequiv. N/g] | Viskosität des eingesetzten Aminöls [mm²/s] | eingesetzte Menge Cyclodextrin [Gew.%]^{†} | Viskosität des cyclodextrinhaltigen Siliconöls [mm²/s] |
|---|---|---|---|---|---|
| **1a** | A | 0,09 | 300 | 3,4 | 400 |
| **1b** | A | 0,09 | 300 | 5,9 | 550 |
| **1c** | B | 0,60 | 1200 | 10,0 | 5680 |
| **1d** | B | 0,60 | 1200 | 17,5 | 9750 |

| | | | | | |
|---|---|---|---|---|---|
| † bezogen auf das Gesamtgewicht des eingesetzten Siliconöls | | | | | |

Bei dem in den Beispielen 1a - d eingesetzten Cyclodextrin handelt es sich um 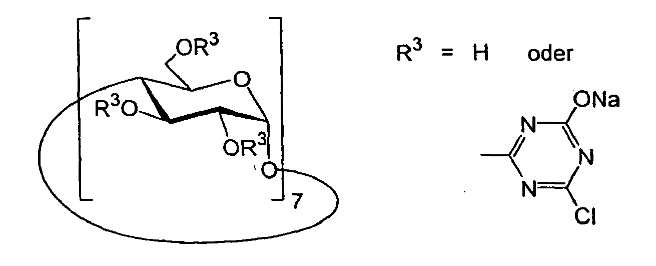 welches unter dem Handelsnamen CAVASOL^{®} W7 MCT bei der Firma Wacker-Chemie GmbH, D-München käuflich erhältlich ist. Die Siloxane A und B sind im folgenden beschrieben, wobei Me Methylrest bedeutet.

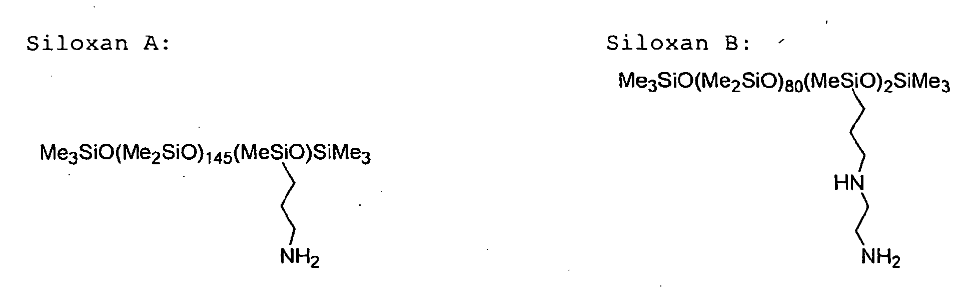

### Beispiel 2

100 g eines mit Trimethylsilylgruppen terminierten Siliconöls der unten näher bezeichneten Art werden in einem Becherglas vorgelegt. Mit einem azentrischen Dissolversystem (Molteni, Labmax, 6 000 U/min) dispergiert man in den Beispielen 2b-e 5 Minuten lang die Menge Hilfsbase ein, welche der Anzahl H-acider Gruppen des verwendeten Siliconöls equivalent ist. Danach gibt man die in Tabelle 2 angegebene Menge Cyclodextrin, jeweils gelöst in der 1,2-fachen Menge Wasser, zu und arbeitet dies 90 bis 120 Minuten ein. Nach dem Abdestillieren des verbliebenen Restwassers werden cyclodextrinhaltige Siliconöle erhalten, die keinerlei Ausflockung oder Ausfällung des Cyclodextrins über Monate hinweg zeigen.

**Tabelle 2**

| Beispiel | eingesetztes Siliconöl | Viskosität des eingesetzten Siliconöls [mm²/s] | eingesetzte Menge Cyclodextrin [Gew.-%]^{†} | Viskosität des cyclodextrinhaltigen Siliconöls [mm²/s] |
|---|---|---|---|---|
| **2a** | C | 5300 | 5 | 6350 |
| **2b** | D^{a)} | 50 | 10 | 1350 |
| **2c** | E^{a)} | 13600 | 5 | 15000 |
| **2d** | F^{a)b)} | 150 | 2,5 | 1280 |
| **2e** | G^{c)} | 900 | 5 | 3050 |

| | | | | |
|---|---|---|---|---|
| ^{†} bezogen auf das Gesamtgewicht des eingesetzten Siliconöls a) Hilfsbase: Triethylamin b) 50% ige wässrige Lösung; CD als Feststoff zugeben c) Hilfsbase: ^{t}BuOK | | | | |

Das in den Beispielen 2a-e eingesetzte Cyclodextrin ist in Beispiel 1 beschrieben. Die Siloxane C bis G sind im folgenden beschrieben, wobei Me Methylrest bedeutet.

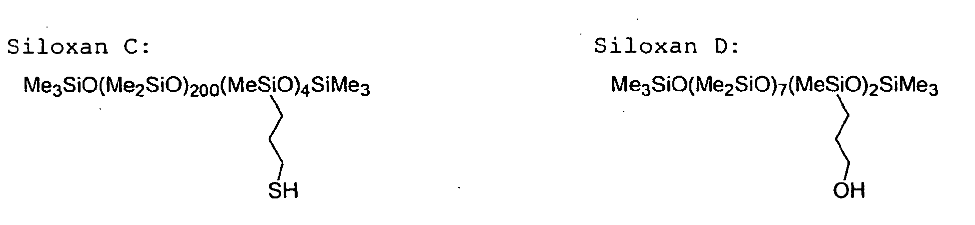

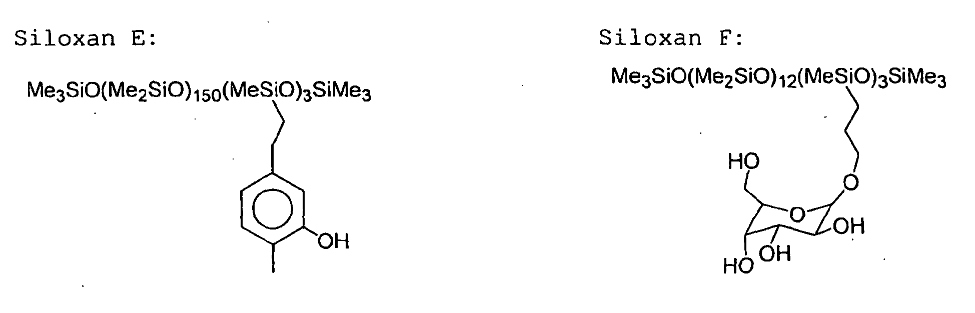

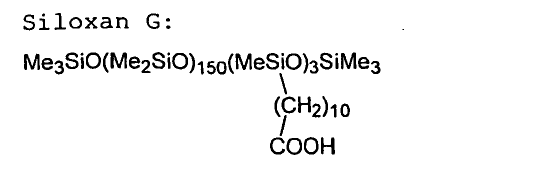

### Beispiel 3

Zu 100 g Emulsion bestehend aus
- 17,5 Gew.-% aminoethylaminopropylfunktionalisiertem Organopolysiloxan mit Trimethylsilylendgruppen und einer mittleren Kettenlänge von ca. 150 sowie der in Tabelle 3 angegebenen Aminzahl und ca.
- 10 Gew.-% ethoxylierte Fettsäure mit einer Kettenlängenverteilung zwischen 12 und 18 C-Atomen sowie
- 72,5 Gew.-% Wasser
wird bei Raumtemperatur jeweils die in Tabelle 3 angegebene Menge Cyclodextrin, jeweils gelöst in 1 g Wasser, unter Rühren zugegeben. Die jeweils erhaltene Emulsion wird dann 7 Tage bei Raumtemperatur gelagert und anschließend mit 20%iger Natriumchloridlösung gebrochen. Das so erhaltene, cyclodextrinhaltige Siliconöl wird noch 10 mal mit je 100 g 20%iger NaCl-Lösung nachgewaschen. Nach dem Abdestillieren des verbliebenen Restwassers werden cyclodextrinhaltige Siliconöle erhalten, die keinerlei Ausflockung oder Ausfällung des Cyclodextrins über Monate hinweg zeigen.

**Tabelle 3**

| Beispiel | Aminzahl der Siliconöl-Emulsion | eingesetzte Menge Cyclodextrin | Cyclodextringehalt relativ zum Amingehalt |
|---|---|---|---|
| **3a** | 0,6 | 390 mg | 5 % |
| **3b** | 0,2 | 390 mg | 15 % |

Das in den Beispielen 3a und 3b eingesetzten Cyclodextrin ist in Beispiel 1 beschrieben.

### Beispiel 4

100 g eines in Beispiel 1 beschriebenen Siliconöls (aminopropylfunktionalisiert, mit Trimethylsilylgruppen terminiert) werden in 250 ml Dimethylsulfoxid gelöst. Dazu gibt man eine Lösung von 5,3 g des in Beispiel 1 beschriebenen Cyclodextrins in 25 ml Dimethylsulfoxid. Das Reaktionsgemisch wird für eine Stunde auf 80°C erwärmt. Anschließend destilliert man bei 80°C und Vollvakuum das Lösungsmittel ab. Es wird ein cyclodextrinhaltiges Siliconöl mit einer Viskosität von 500-600 mm²/s erhalten, das keinerlei Ausflockung oder Ausfällung des Cyclodextrins über Monate hinweg zeigt.

### Beispiel 5

100 g des in Beispiel 2 als Siloxan G beschriebenen Siliconöls (Undecansäurefunktionalisiert, mit Trimethylsilylgruppen terminiert) werden in 250 ml Dimethylsulfoxid suspendiert, mit einer den Carboxylgruppen equivalenten Menge KOH versetzt und bei Raumtemperatur 30 Minuten gerührt. Dazu gibt man eine Lösung von 4,1 g des in Beispiel 1 beschriebenen Cyclodextrins in 20 ml Dimethylsulfoxid und erwärmt das Reaktionsgemisch wird für eine Stunde auf 80°C. Anschließend filtriert man vom gebildeten Feststoff (KCl) ab und entfernt bei 80°C im Vollvakuum das Lösungsmittel durch Destillation. Es wird ein cyclodextrinhaltiges Siliconöl mit einer Viskosität von 1030 mm²/s erhalten, das keinerlei Ausflockung oder Ausfällung des Cyclodextrins über Monate hinweg zeigt.

### Beispiel 6

100 g eines aminoalkylfunktionalisierten, mit Trimethylsilylgruppen terminierten Siliconöls der unten näher bezeichneten Art werden in einem Becherglas vorgelegt. Mit dem in Beispiel 1 beschriebenen Ultra-Turrax dispergiert man die in Tabelle 4 angegebene Menge Cyclodextrinderivat, jeweils gelöst in der 1,2-fachen Menge Wasser, ein und arbeitet die Reaktionsmischung 90 bis 120 Minuten gut durch. Dabei steigt die Temperatur je nach Viskosität des eingesetzten Siliconöls auf etwa 50 bis 80°C. Nach dem Abdestillieren des verbliebenen Restwassers werden cyclodextrinhaltige Siliconöle erhalten, die keinerlei Ausflockung oder Ausfällung des Cyclodextrins über Monate hinweg zeigen.

**Tabelle 4**

| Beispiel | eingesetztes Siliconöl | Aminzahl des eingesetzten Siliconöls [mequiv. N/g] | Viskosität des eingesetzten Aminöls [mm²/s] | eingesetzte Menge Cyclodextrin [Gew.-%]^{†} | Viskosität des cyclodextrinhaltigen Siliconöls [mm²/s] |
|---|---|---|---|---|---|
| **6a** | C | 0,86 | 300 | 2 | 625 |
| **6b** | D | 0,62 | 950 | 2 | 3530 |

| | | | | | |
|---|---|---|---|---|---|
| ^{†} bezogen auf das Gesamtgewicht des eingesetzten Siliconöls | | | | | |

Bei dem in den Beispielen 6a und 6b eingesetzten Cyclodextrin handelt es sich um 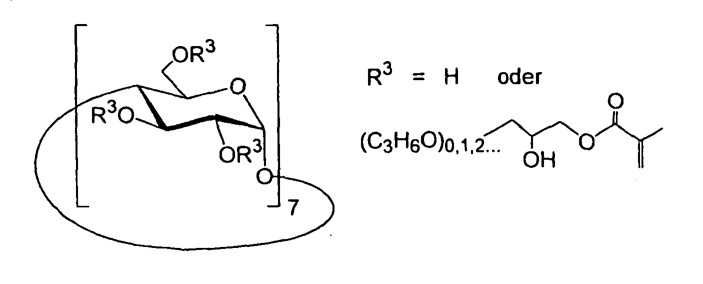 welches als "BETA W7 MAHP 0.1/0.4" bei der Firma Wacker-Chemie GmbH, D-München erhältlich ist und einen Gehalt von durchschnittlich 0,9 Mol Methacrylat/Cyclodextrin hat. Die Siloxane C und D sind im folgenden beschrieben, wobei Me Methylrest bedeutet.

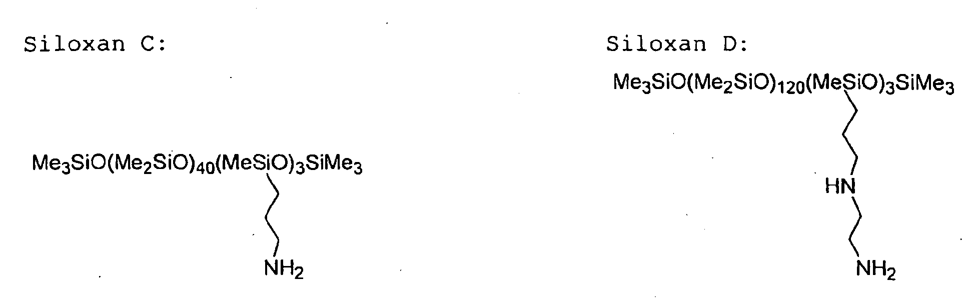

### Beispiel 7

100 Teile eines monochlortriazinylfunktionellen β-Cyclodextrins (käuflich erhältlich unter der Bezeichnung CAVASOL^{®} W 7 MCT bei der Wacker-Chemie GmbH, D-München) wurden in 700 Teilen destilliertem Wasser gelöst und die Lösung mit Zitronensäure auf pH 5 eingestellt. 7 Teile Parfümöl (käuflich erhältlich unter der Bezeichnung "Black Magic Y5" der Fa. Cosmaderm D-Ladenburg) wurden unter Rühren zugegeben. Durch Einlagerung in das Cyclodextrin verschwindet das wasserunlösliche Parfümöl in der wässrigen Lösung. Die Lösung wurde mit 80 Teilen einer Mikroemulsion enthaltend 17 Teile eines linearen mit Hydroxydimethylgruppen terminierten Dimethyl/Methyl, Aminoethylaminopropyl-Siloxanes der Aminzahl 0,6 und der Viskosität 1000 mm²/s sowie 6,6 Teilen Emulgatoren (iso-C13 Fettalkohol x 5-8 EO) (Mikroemulsion ist käuflich erhältlich unter der Bezeichnung "Finish 46016 VP" bei der Wacker-Chemie GmbH, D-München) versetzt und 10 Minuten gerührt.

Es wird Cyclodextringruppen aufweisendes Organopolysiloxan mit einer Restaminzahl von 0,08 in Emulsionsform erhalten mit guten Gebrauchseigenschaften als Weichmacher und langanhaltender Duftnote erhalten.

0,65 kg der so erhaltenen Emulsion wurden am Foulard auf 1 kg eines Mischgewebes aus 98 % Wolle und 2 % Elasthanfaser (Spandex) aufgegeben, wobei eine Flottenaufnahme von 65 % resultierte. Die anschließende Trocknung erfolgte zunächst 3 Minuten bei 90°C und dann 3 Minuten bei 150°C.

Das so behandelte Textilsubstrat weist einen angenehmen Griff auf und kann das eingelagerte Parfümöl über mehrere Monate speichern, jedoch bei gleichzeitiger Einwirkung von Körperwärme und Feuchtigkeit, also unter Tragebedingungen, dosiert abgeben.

### Beispiel 8

Die in Beispiel 1 angegebene Verfahrensweise wird wiederholt mit der Abänderung, dass als Parfümöl 8 Teile Rosenöl (käuflich erhältlich unter der Bezeichnung "Typ 131650" bei der Fa. Kurt Kitzing, D-Wallerstein) eingestzt wurde. Die Applikation erfolgte auf Baumwoll-Wirkware, die zu T-Shirts verarbeitet werden sollte. Das Textilsubstrat war durch eine monatelang anhaltende Duftnote gekennzeichnet.

### Beispiel 9

100 Teile Monochlortriazin-funktionelles β-Cyclodextrin (käuflich erhältlich unter dem Namen CAVASOL^{®} W 7 MCT bei der Wacker-Chemie GmbH, D-München) wurden in 800 Teilen Wasser gelöst und mit Zitronensäure auf pH 5 gestellt. Die Lösung wurde mit 7 Teilen Parfümöl (käuflich erhältlich unter der Bezeichnung "Fragrance Patricia Y" bei der Fa. Cosmaderm, D-Ladenburg) versetzt und 5 Minuten gerührt. Nach dieser Zeit war das Parfümöl trotz Wasserunlöslichkeit in den Kavitäten des Cyclodextrines eingelagert und optisch aus dem wässrigen System verschwunden. Die Lösung wurde mit 30 Teilen einer 35 %igen Emulsion eines Aminöles der Viskosität 4000 mm²/s und der Aminzahl 0,15 (Aminoethylaminopropyl-funktonelles Silicon) sowie 5 Teilen Emulgator (C13-Fettalkoholethoxylat) 0,3 Teilen Polyalkoxyoligosiloxan als Vernetzer und 0,5 Teilen Katalysator auf der Basis von Dialkylzinndilaurat (käuflich erhältlich unter der Bezeichnung "Finish CT 45 E" bei der Wacker-Chemie GmbH, D-München) versetzt. Die Behandlungsflotte wurde auf ein Mischgewebe Baumwolle/Elasthan 98:2 Twill mit einer Flottenaufnahme von 70 % auffoulardiert und 3 Minuten bei 90°C sowie 3 Minuten bei 150°C getrocknet. Es resultierte ein Gewebe mit angenehmen Warengriff und langanhaltender Duftnote.

### Beispiel 10

Die in Beispiel 9 beschriebene Verfahrensweise wird wiederholt mit der Abänderung, dass als Parfümöl 6 Teile Citral 54450 der Fa. Drohm, Deutschland eingesetzt werden. Es resultierte ein Textilsubstrat mit angenehmem Frischeduft.

Wird ein nach den Beispielen 7 bis 10 ausgerüstetes Kleidungsstück längere Zeit getragen, so wird langsam der gesamte Duft abgegeben. Das Kleidungsstück kann dann einer normalen Haushaltswäsche unterzogen werden. Während der Tumblertrocknung ist eine erneute Befüllung der Cylclodextrinkavitäten mit Parfümöl durch Zugabe des Parfüms in den Tumbler möglich. Dies beweist, dass der Substratkomplex Cyclodextrinaminosilicon waschbeständig auf dem Textilsubstrat fixiert wurde.

### Vernetzbare Massen

### Beispiel 11

### Herstellung der Komponente (B1)

1560 Teile eines monochlortriazin-funktionellen β-Cyclodextrins (käuflich erhältlich unter der Marke CAVASOL^{®} W7 MCT bei der Wacker-Chemie GmbH, D-München) wurden in 3000 Teilen Wasser gelöst und mit Citronensäure auf pH 5 eingestellt. Die Lösung wurde mit 222 Teilen Trimethoxyaminopropylaminoethylsilan (käuflich erhältlich unter der Bezeichnung. "Silan GF 91" bei der Wacker-Chemie GmbH, D-München) versetzt und 10 Minuten bei Raumtemperatur gerührt. Dabei reagiert der Monochlortriazinrest mit der primären Amingruppe des Aminosilans durch nucleophile Substitution. Die so erhaltene Reaktionslösung kann direkt als wässrige Komponente B eingesetzt werden.

### Herstellung der Komponente (B2)

1560 Teile eines monochlortriazin-funktionellen β-Cyclodextrins (käuflich erhältlich unter der Marke CAVASOL^{®} W7 MCT bei der Wacker-Chemie GmbH, D-München) wurden in 2000 Teilen Wasser gelöst und mit Citronensäure auf pH 5 eingestellt. Die Lösung wurde mit 159 Teilen Diethoxy(Methyl)Aminopropylsilan(käuflich erhältlich unter der Bezeichnung "Dynasilan 1505" bei der Degussa AG, Deutschland versetzt und 10 Minuten bei Raumtemperatur gerührt. Die so erhaltene Reaktionslösung kann direkt als wässrige Komponente B eingesetzt werden.

### Herstellung der Komponente (B3)

100 Teile eines monochlortriazin-funktionellen β-Cyclodextrins (käuflich erhältlich unter der Marke CAVASOL^{®} W7 MCT bei der Wacker-Chemie GmbH, D-München) wurden in 700 Teilen Wasser gelöst und mit Citronensäure auf pH 5 eingestellt. Die Lösung wurde mit 180 Teilen einer Microemulsion (käuflich erhältlich unter der Bezeichnung "Finish 46016 VP" bei der Wacker-Chemie GmbH, D-München) versetzt und zur Umsetzung 15 Minuten gerührt. Die erwähnte Microemulsion besteht aus 17 Teilen eines aminoethylaminopropylfunktionellen Siliconöles der Aminzahl 0,6 und der Viskosität 1000 mm²/s mit Si(CH₃)₂OH-Endgruppen, 6,6 Teilen Emulgator (C13 Fettalkohol mit 8 EO) und Wasser, wobei die Emulsion mit Essigsäure auf pH 5,5 eingestellt ist.
a) 20 g der oben hergestellten Komponente B1 und 20 g einer 50 % igen Emulsion eines SiOH-endständigen Dimethylpolysiloxanes der Ölviskosität 100000 mm²/s, entstanden durch Emulsdionspolymerisation, wurden in 1 l destilliertem Wasser gelöst und 2 g Aminopropyltriethoxysilan als Vernetzer zugegeben.
   Mit dieser Flotte wurde 1 kg Polyester-Füllfaser (Trevira® Typ 292, 6,7 dtex, 60 mm Stapellänge der Trevira AG, Deutschland) getränkt und durch gezieltes Abquetschen eine Flottenaufnahme von 100 % erzeugt. Die Siliconauflage betrug somit ca. 0,19 % (Menge an vernetzbarer Masse).
   Die Füllfasern wurden 5 Minuten bei 150°C und anschließend 5 Minuten bei 190°C getrocknet und kondensiert.
   Es entstand eine weiche, sprungelastische Füllfaser, die z.B. mit Duftstoff beaufschlagt werden kann und geruchsbindende Eigenschaften aufweist.
b) Die unter a) beschriebene Verfahrensweise wird wiederhlot mit der Abänderung, dass anstelle von 20 g Komponente B1, 25 g Komponente B2 eingesetzt wurde. Die Siliconauflage betrug somit ca. 0,23 % (Menge an vernetzbarer Masse).
   Es entstand eine weiche, sprungelastische Füllfaser, die z.B. mit Duftstoff beaufschlagt werden kann und geruchsbindende Eigenschaften aufweist.
c) Die unter a) beschriebene Verfahrensweise wird wiederhlot mit der Abänderung, dass anstelle von 20 g Komponente B1, 70 g Komponente B3 eingesetzt wurde. Die Siliconauflage betrug somit ca. 0,2 % (Menge an vernetzbarer Masse).
   Es entstand eine weiche, sprungelastische Füllfaser, die z.B. mit Duftstoff beaufschlagt werden kann und geruchsbindende Eigenschaften aufweist.

### Beispiel 12

60 g eines aminofunktionellen Weichmachers, bestehend aus einer Emulsion, die 35 % eines reaktiven d.h. Si(CH₃)₂OH-endständigen Aminöles der Viscosität 1000 mm²/s und der Aminzahl von 0,3 enthielt (käuflich erhältlich unter der Bezeichnung "Finish CT 78 E" bei der Wacker-Chemie GmbH, D-München) sowie 20 Teile der Komponente B2 wurden mit deionisiertem Wasser auf 500 ml verdünnt.2 g Trimethoxy-aminoethylaminopropyl-silan als Vernetzer (käuflich erhältlich unter der Bezeichnung "Silan GF 91" bei der Wacker-Chemie GmbH, D-München) wurden zugegeben.
Zur wässrigen Mischung wurden 4 g Parfümöl (käuflich erhältlich unter der Bezeichnung "Fragrance Lavender-Y" der Fa. Cosnaderm; Deutschland) unter Rühren zugefügt. Das wasserunlösliche Parfümöl verschwindet dabei in der Flotte, da es in den Cyclodextrinrest eingelagert wird.
Die Flotte wurde auf ein Füllfaservlies aufgesprüht, wobei die Flottenaufnahme 10 % beträgt, entsprechend 0,45 % Siliconauflage. Das Vlies wurde anschließend 30 Minuten bei 130°C getrocknet.

Es entstand ein weiches, sprungelastisches Vlies mit ausgeprägter, lang anhaltender, angenehmer Duftnote. Als Einlagevlies zeigte es nach Abgabe der Duftstoffe geruchsbindende Eigenschaften.

### Beispiel 13

Eine Flotte enthaltend 20 g einer Emulsion eines aminofunktionellen, SiOH-endständigen Polydimethylsiloxanes (käuflich erhältlich unter der Bezeichnung "Finish CT 78 E" bei der Wacker-Chemie GmbH, D-München) und 200g Komponente B 3 wurden auf einen Liter verdünnt mit deionisiertem Wasser. Es wurden 0,2 g Polyalkoxyoligosiloxan als Vernetzer (käuflich erhältlich unter der Bezeichnung "V 42" bei der Wacker-Chemie GmbH, D-München) und 0,25 g einer 25 %igen Emulsion von Dioctylzinndilaurat als Katalysator (käuflich erhältlich unter der Bezeichnung "C 38" bei der Wacker-Chemie GmbH, D-München) zugegeben.
Diese Flotte wurde auf Polyester-Maschenware auffoulardiert. Hierunter versteht man Tauchen des Textils in ein Behandlungsbad, vorzugsweise bei Raumtemperatur und anschließendes Passieren einer aus 2 Walzen bestehenden Quetschvorrichtung. Damit wurde eine Flottenaufnahme von 65 % eingestellt. Das behandelte Textil wurde anschließend 3 Minuten bei 160°C getrocknet.
Es entstand ein weiches, elastisches voluminöses Flächengebilde mit sog. Frischeeffekt, d.h. geruchsbindenden Eigenschaften.

## Patentansprüche

1. Vernetzbare Massen auf der Basis von Organosiliciumverbindungen enthaltend
(A) Organopolysiloxane mit mindestens zwei hydrolysierbaren bzw. kondensationsfähigen Resten, ausgewählt aus Organyloxygruppen sowie Hydroxyresten,
(B) Cyclodextrinreste aufweisende Organosiliciumverbindung mit mindestens zwei hydrolysierbaren bzw. kondensationsfähigen Resten, ausgewählt aus Organyloxygruppen sowie Hydroxyresten, und/oder deren Teilhydrolysaten bzw. deren Teilkondensaten, gegebenenfalls
(C) Vernetzer, ausgewählt aus mindestens zwei Si-gebundene Wasserstoffatome aufweisenden Organopolysiloxanen und Aminogruppen aufweisenden Organosiliciumverbindungen mit mindestens zwei hydrolysierbaren bzw. kondensationsfähigen Resten, ausgewählt aus Organyloxygruppen sowie Hydroxyresten, und
gegebenenfalls
(D) Kondensationskatalysator.

2. Vernetzbare Massen gemäß Anspruch 1, **dadurch gekennzeichnet, dass** es sich bei Organopolysiloxanen (A) um solche der allgemeinen Formel
(R^{3 '}O)_{3-e '}R^{4 '}_{e '}SiO-[R^{4 '}₂SiO]_{f '}-SiR^{4 '}_{e '}(OR^{3 '})_{3-e '} (I ')
handelt, wobei
e ' 0, 1 oder 2 ist,
R^{4 '} gleiche oder verschiedene SiC-gebundene Kohlenwasserstoffreste, die gegebenenfalls mit Halogenatomen, Aminogruppen, Ethergruppen, Estergruppen, Epoxygruppen, Cyanogruppen oder (Poly)glykolresten substituiert sind, wobei letztere aus Oxyethylen- und/oder Oxypropyleneinheiten aufgebaut sind, bedeutet und
R^{3 '} gleich oder verschieden sein kann Wasserstoffatom oder eine für R^{4 '} angegebene Bedeutung hat,
f' eine ganze Zahl von 10 bis 100000 ist, mit der Maßgabe, dass e' nur bei R^{3 '} gleich Wasserstoffatom den Wert 2 haben kann.

3. Vernetzbare Massen gemäß Anspruch 1 oder 2, **dadurch gekennzeichnet, dass** es sich bei Organosiliciumverbindungen (B) um solche enthaltend Einheiten der Formel
A '_{a '}R '_{b '}X '_{c '}SiO_{(4-a '-b '-c '})_{/2} (II ')
handelt, wobei
A' gleich oder verschieden sein kann und einen Rest der Formel
CD'' '-R^{2 '}- (III ')
bedeutet, wobei
CD''' ' einwertiger, gegebenenfalls derivatisierter Cyclodextrinrest bedeutet und R^{2 '} ein zweiwertiger, gegebenenfalls substituierter Kohlenwasserstoffrest bedeutet, der mit Sauerstoff, Mercapto-, Amin-, Carbonyl-, Carboxyl-, Sulfoxid- oder Sulfonylgruppen unterbrochen sein kann,
R' gleich oder verschieden sein kann und einen gegebenenfalls substituierten Kohlenwasserstoffrest, der durch Sauerstoffatome und/oder Stickstoffatome unterbrochen sein kann, bedeutet,
X ' gleich oder verschieden sein kann und einen Rest der Formel -OR^{1 '} mit R^{1 '} gleich Wasserstoffatom oder gegebenenfalls substituierten Kohlenwasserstoffrest, der durch Ethersauerstoffatome substituiert sein kann, bedeutet,
a ' 0, 1 oder 2 ist
b ' 0, 1, 2 oder 3 ist und
c ' 0, 1, 2 oder 3 ist,
mit der Maßgabe, dass die Summe a '+b '+c ' ≤ 4 ist, die Organosiliciumverbindung pro Molekül mindestens einen Rest A' und mindestens zwei Reste X ' aufweist.

4. Vernetzbare Massen gemäß einem oder mehreren der Ansprüche 1 bis 3, **dadurch gekennzeichnet, dass** es sich um solche handelt, die aus
(A) 100 Gewichtsteilen Organopolysiloxan der Formel (I'),
(B) 20 bis 60 Gewichtsteilen Cyclodextrinreste aufweisende Organosiliciumverbindung enthaltend Einheiten der Formel (II') und
(C) 1 bis 10 Teilen Vernetzer, ausgewählt aus Di- und Trialkoxyaminosilan bzw. dessen Teilhydrolysate,
bestehen.

5. Verfahren zur Behandlung von organischen Fasern, **dadurch gekennzeichnet, dass** Massen gemäß einem oder mehreren der Ansprüche 1 bis 4 auf die zu behandelnden Fasern aufgebracht und vernetzen gelassen werden.

## Claims

1. Crosslinkable compositions based on organosilicon compounds comprising
(A) organopolysiloxanes having two or more hydrolyzable or condensation-capable moieties selected from organyloxy groups and hydroxyl radicals,
(B) a cyclodextrinyl-containing organosilicon compound having two or more hydrolyzable or condensation-capable moieties selected from organyloxy groups and hydroxyl radicals, and/or their partial hydrolyzates or their partial condensates, if appropriate
(C) a crosslinker selected from organopolysiloxanes having two or more Si-attached hydrogen atoms and amino-containing organosilicon compounds having two or more hydrolyzable or condensation-capable moieties selected from organyloxy groups and hydroxyl radicals and if appropriate
(D) a condensation catalyst.

2. Crosslinkable compositions according to Claim 1, **characterized in that** organopolysiloxanes (A) have the general formula
(R^{3 '}O)_{3-e '}R^{4 '}_{e '}SiO- [R^{4 '}₂SiO]_{f '}-SiR^{4 '}_{e '} (OR^{3 '})_{3-e '} (I ')
where
e' is 0, 1 or 2,
R^{4'} denotes identical or different SiC-attached hydrocarbyl radicals with or without substitution by halogen atoms, amino groups, ether groups, ester groups, epoxy groups, cyano groups or (poly)glycol radicals, the latter being constructed from oxyethylene and/or oxypropylene units, and
R^{3'} may in each occurrence be the same or different and represent a hydrogen atom or have one of the meanings indicated for R^{4 '} ,
f' is an integer from 10 to 100 000, with the proviso that e' can only be 2 when R^{3 '} is a hydrogen atom.

3. Crosslinkable compositions according to Claim 1 or 2, **characterized in that** organosilicon compounds (B) comprise units of the formula
A'_{a'}R'_{b'}X'_{c'}SiO(_{4-a'-b'-c'})_{/2} (II')
where
A' may in each occurrence be the same or different and represent a radical of the formula
CD'- R^{2'} - (III')
where
CD' represents a monovalent, derivatized or underivatized cyclodextrin radical and R^{2'} represents a divalent, substituted or unsubstituted hydrocarbyl radical which may be interrupted by oxygen or by mercapto, amine, carbonyl, carboxyl, sulfoxide or sulfonyl groups,
R' may in each occurrence be the same or different and represents a substituted or unsubstituted hydrocarbyl radical which may be interrupted by oxygen atoms and/or nitrogen atoms,
X' may in each occurrence be the same or different and is a radical of the formula -OR^{1'} where R^{1'} is a hydrogen atom or substituted or unsubstituted hydrocarbyl with or without substitution by ether oxygen atoms,
a' is 0, 1 or 2,
b' is 0, 1, 2 or 3, and
c' is 0, 1, 2 or 3,
with the proviso that the sum a'+b'+c' is ≤ 4, the organosilicon compound has at least one A' radical and at least two X' radicals per molecule.

4. Crosslinkable compositions according to one or more of Claims 1 to 3, **characterized in that** they consist of
(A) 100 parts by weight of organopolysiloxane of the formula (I'),
(B) 20 to 60 parts by weight of a cyclodextrinyl-containing organosilicon compound comprising units of the formula (II'), and
(C) 1 to 10 parts of a crosslinker selected from di- and trialkoxyaminosilane and its partial hydrolyzates.

5. Process for treating organic fibers, **characterized in that** compositions according to one or more of Claims 1 to 4 are applied to, and left to crosslink on, the fibers to be treated.

## Revendications

1. Masses réticulables à base de composés organosiliciés contenant
(A) des organopolysiloxanes comprenant au moins deux radicaux hydrolysables ou condensables, choisis parmi les groupes organyloxy ainsi que des radicaux hydroxy,
(B) un composé organosilicié présentant des radicaux cyclodextrine comprenant au moins deux radicaux hydrolysables ou condensables, choisis parmi les groupes organyloxy ainsi que des radicaux hydroxy, et/ou ses hydrolysats ou ses condensats partiels, le cas échéant
(C) des réticulants, choisis parmi les organopolysiloxanes présentant au moins deux atomes d'hydrogène liés par Si et les composés organosiliciés présentant des groupes amino, comprenant au moins deux radicaux hydrolysables ou condensables, choisis parmi les groupes organyloxy ainsi que des radicaux hydroxy et le cas échéant
(D) un catalyseur de condensation.

2. Masses réticulables selon la revendication 1, **caractérisées en ce qu'**il s'agit, pour les organopolysiloxanes (A), de ceux de formule générale
(R^{3'}O)_{3-e'}R^{4'}_{e'}SiO-[R₂SiO]_{f'}-SiR^{4'}_{e'} (OR^{3'})_{3-e'} (I')
où
e' vaut 0, 1 ou 2,
R^{4'} signifie des radicaux hydrocarbonés liés par SiC identiques ou différents, qui sont le cas échéant substitués par des atomes d'halogène, des groupes amino, des groupes éther, des groupes ester, des groupes époxy, des groupes cyano ou des radicaux (poly)glycol, ces derniers étant formés d'unités oxyéthylène et/ou oxypropylène, et
R^{3'} peut être identique ou différent et signifie un atome d'hydrogène ou une signification indiquée pour R^{4'},
f' représente un nombre entier de 10 à 100 000, à condition que e' ne puisse valoir 2 que lorsque R^{3'} représente un atome d'hydrogène.

3. Masses réticulables selon la revendication 1 ou 2, **caractérisées en ce qu'**il s'agit, pour les composés organosiliciés (B), de ceux contenant des unités de formule
A'_{a'}R'_{b'}X'_{c'}SiO_{(4-a'-b'-c')}/2 (II')
où
A' peut être identique ou différent et signifie un radical de formule
CD'-R^{2'}- (III')
où
CD' signifie un radical cyclodextrine monovalent, le cas échéant dérivé et R^{2'} signifie un radical hydrocarboné divalent, le cas échéant substitué, qui peut être interrompu par oxygène, des groupes mercapto, amine, carbonyle, carboxyle, sulfoxyde ou sulfonyle,
R' peut être identique ou différent et signifie un radical hydrocarboné le cas échéant substitué, qui peut être interrompu par des atomes d'oxygène et/ou des atomes d'azote,
X' peut être identique ou différent et signifie un radical de formule -OR^{1'} avec R^{1'} représentant un atome d'hydrogène ou un radical hydrocarboné le cas échéant substitué, qui peut être substitué par des atomes d'oxygène à fonction éther,
a' vaut 0, 1 ou 2
b' vaut 0, 1, 2 ou 3 et
c' vaut 0, 1, 2 ou 3,
à condition que la somme a' + b' + c' ≤ 4, que le composé organosilicié présente, par molécule, au moins un radical A' et au moins deux radicaux X'.

4. Masses réticulables selon l'une ou plusieurs des revendications 1 à 3, **caractérisées en ce qu'**il s'agit de celles qui sont constituées par
(A) 100 parties en poids d'organopolysiloxane de formule (I'),
(B) 20 à 60 parties en poids de composé organosilicié présentant des radicaux cyclodextrine contenant des unités de formule (II') et
(C) 1 à 10 parties de réticulant, choisi parmi le dialcoxyaminosilane et le trialcoxyaminosilane ou leurs hydrolysats partiels.

5. Procédé pour le traitement de fibres organiques, **caractérisé en ce que** les masses selon l'une ou plusieurs des revendications 1 à 4 sont appliquées sur les fibres à traiter et on les laisse se réticuler.
